# EUROPÄISCHE PATENTSCHRIFT

(11) **EP 4 246 113 B1**
(45) Veröffentlichungstag und Bekanntmachung des Hinweises auf die Patenterteilung: **06.08.2025**
(21) Anmeldenummer: 23162018.8
(22) Anmeldetag: 15.03.2023
(51) Int. Cl.: G01L 13/02

(54) **MODULAR AUFGEBAUTER DIFFERENZDRUCKSENSOR**
DIFFERENTIAL PRESSURE SENSOR OF MODULAR CONSTRUCTION
CAPTEUR DE PRESSION DIFFÉRENTIELLE DE CONCEPTION MODULAIRE

(30) Priorität: 16.03.2022 DE 102022106195
(43) Veröffentlichungstag der Anmeldung: 20.09.2023
(73) Patentinhaber: duotec GmbH, 58553 Halver (DE)
(72) Erfinder: Weber, Werner, 58553 Halver (DE)
(74) Vertreter: Lippert Stachow Patentanwälte Rechtsanwälte

(56) Entgegenhaltungen:
- US-A- 3 505 634
- US-A- 4 221 134
- US-A1- 2011 259 109

## Beschreibung

Die Erfindung betrifft einen Differenzdrucksensor gemäß dem Oberbegriff von Anspruch 1 sowie ein Set zur Realisierung eines solchen Differenzdrucksensors und die Verwendung eines solchen Sets bzw. eines solchen Differenzdrucksensors.

Gattungsgemäße Differenzdrucksensoren werden dazu eingesetzt, den Druck, der in einem Messvolumen herrscht, relativ zu einem Druck bestimmen, der in einem an das Messvolumen angrenzenden Volumen herrscht. Hierzu weisen solche Differenzdrucksensoren ein Gehäuse mit einer Wandung und eine Membran auf, die sich in einer Horizontalen über einen Membranabschnitt hinweg erstreckt. Der Membranabschnitt weist eine erste und eine zweite sich horizontal erstreckende flächige Seite auf, wobei die Wandung und der Membranabschnitt mit seiner ersten flächigen Seite ein Messvolumen in dem Gehäuse begrenzen. Die zweite flächige Seite des Membranabschnitts weist von dem Messvolumen weg. Bevorzugt sind erste und zweite flächige Seite jeweils Vertikalseiten des Membranabschnitts, die somit entlang einer auf der Horizontalen senkrecht stehenden Vertikalrichtung in entgegengesetzte Richtung weisen. Ein gattungsgemäßer Differenzdrucksensor weist ferner einen Dehnungsmesssensor auf, der innerhalb des Membranabschnitts an der Membran angeordnet ist. Bei einer bestimmungsgemäßen Verwendung wird ein gattungsgemäßer Differenzdrucksensor mit seinem Messvolumen fluidführend an ein fluidführendes Leitungssystem angeschlossen. Die zweite flächige Seite des Membranabschnitts, die von der ersten flächigen Seite des Membranabschnitts wegweist und somit von dem Messvolumen durch die Erstreckung der Membran beabstandet ist, grenzt an ein Referenzvolumen an. Als Referenzvolumen kann beispielsweise ein zweites Messvolumen oder ein unbegrenztes Umgebungsvolumen, beispielsweise gefüllt mit Umgebungsluft, vorgesehen sein. Der auf das Fluid in dem fluidführenden Leitungssystem wirkende Druck wird durch Differenzbildung zwischen dem in dem Messvolumen vorherrschenden ersten Druck und dem in dem Referenzvolumen vorherrschenden zweiten Druck ermittelt, wobei die Differenzbildung mittels des auf dem Membranabschnitt angeordneten Dehnungsmesssensors erfolgt. Solche Dehnungsmesssensoren (DMS) sind dem Fachmann hinlänglich bekannt. Ein solcher DMS verändert seinen elektrischen Widerstand in Abhängigkeit von einer mechanischen Kraftbelastung. Beispielsweise sind DMS bekannt, bei denen eine geometrische Verformung eine Veränderung des Leiterquerschnitts und somit der Stromdichte und hierdurch eine Veränderung des Widerstands bewirkt, wenn sie mit einem Messstrom beaufschlagt sind. Beispielsweise sind DMS bekannt, bei denen eine Kraftbelastung eine Veränderung ihrer Kristallstruktur und dadurch eine Veränderung ihrer elektrischen Eigenschaften, insbesondere ihres elektrischen Widerstandes, bewirkt. Solche zuletzt genannten DMS sind beispielsweise als Siliziumkristall-DMS bekannt. Die beschriebenen, dem Fachmann bekannten DMS werden fachmännisch üblicherweise dergestalt an einen sich verformenden Abschnitt angekoppelt, dass die Verformung in dem Abschnitt eine Kraftbelastung und entsprechende Dehnung in dem DMS erzeugt. Bei einer bestimmungsgemäßen Verwendung eines gattungsgemäßen Differenzdrucksensors verformt sich die Membran innerhalb ihres Membranabschnitts, der das Messvolumen begrenzt, in Abhängigkeit von der Druckdifferenz, die zwischen dem ersten Druck, der in dem Messvolumen herrscht, und dem zweiten Druck, der in dem Referenzvolumen herrscht, besteht. Über den DMS wird die Verformung der Membran innerhalb des Membranabschnitts erfasst. Als Messsignal wird ein Strom- und/oder Spannungssignal von dem DMS ausgegeben, das von der Strom- bzw. Spannungsbeaufschlagung des DMS abhängt. Häufig wird als DMS eine Gruppe von separaten Dehnungsmesssensorbauteilen verwendet, wobei jedes der Bauteile eine wie oben erläuterte Eigenschaft eines DMS aufweist und somit von jedem der Bauteile ein Messsignal zur Charakterisierung der Druckdifferenz ausgegeben werden kann. Durch Auslesen der Messsignale aus verschiedenen solcher Dehnungsmesssensorbauteile kann ein Messfehler minimiert werden. Die Beaufschlagung des DMS und das Auslesen des DMS wird von einer Auswerteeinheit vorgenommen, die auf Basis des ausgelesenen Messwerts einen Wert für die Druckdifferenz ausgibt. Eine solche Auswerteeinheit umfasst zu einer elektrischen Schaltung miteinander verbundene Halbleiterbauteile, beispielsweise Transistoren, integrierte Schaltkreise, etc., die eine Erzeugung und Verarbeitung des aus dem DMS ausgelesenen Messsignals ermöglichen.

Bei der Realisierung und Verwendung gattungsgemäßer Differenzdrucksensoren ergeben sich verschiedenartig gelagerte Schwierigkeiten. So ist zum einen eine abdichtende Verbindung des Membranabschnitts zu der Wandung erforderlich, zum anderen muss eine Anschließbarkeit des Gehäuses mit seiner Wandung in dem Bereich, in dem die Wandung das Messvolumen begrenzt, an ein fluidführendes Leitungssystem ermöglicht sein, und darüber hinaus muss eine Anschließbarkeit des Dehnungsmesssensors an eine elektronische Auswerteeinheit ermöglicht sein. Um dies zu gewährleisten wird üblicherweise ein solcher Differenzdrucksensor komplex aus einer Vielzahl an Komponenten hergestellt, die anschließend aufwendig miteinander verbunden werden müssen. Aufgrund der erforderlichen Verbindungen zwischen den Komponenten ist die Realisierung eines solchen Differenzdrucksensors kostspielig, und für jedes Einsatzgebiet müssen die Komponenten des Differenzdrucksensors gezielt angepasst werden und auf das Einsatzgebiet abgestimmt miteinander verbunden werden.

Zur Realisierung eines Differenzdrucksensors wird üblicherweise zunächst eine Messzelle umfassend die Wandung und die Membran realisiert, indem an der Wandung eine abdichtende Membranhalterung vorgesehen wird, die anschließend mit der Membran verbunden wird zur Festlegung des Messvolumens durch Wandung und Membranabschnitt. Anschließend wird diese Messzelle in ein Anschlussgehäuse des Differenzdrucksensors eingesetzt, das einen Anschlussstutzen zum Anschließen an das fluidführende Leitungssystem aufweist, der in ein Teilvolumen des Anschlussgehäuses mündet, in dem die Messzelle so angeordnet ist, dass der Membranabschnitt das Teilvolumen begrenzt, so dass mittels des an dem Membranabschnitt vorgesehenen Dehnungsmesssensors die Druckdifferenz wie erläutert gemessen werden kann. Zusätzlich wird eine elektrische Leitung an den Dehnungsmesssensor angeschlossen und aus dem Anschlussgehäuse herausgeführt, die dann einer elektronischen Auswerteeinheit durch separate elektrische Kontaktierung zugeführt wird, über die der Dehnungsmesssensor fachmännisch zweckmäßig mit Spannung bzw. Strom beaufschlagt und ausgelesen werden kann und die zum Verarbeiten des ausgelesenen Messsignals ausgebildet ist. Bei der Anordnung der Messzelle in dem Anschlussgehäuse und dem Anschließen der elektrischen Auswerteeinheit an den Dehnungsmesssensor ist dabei ferner zu beachten, dass der Dehnungsmesssensor und die elektrischen Leitungen hinreichend isoliert sind, insbesondere dann, wenn mit dem Differenzdrucksensor ein Druck gemessen werden soll, der in einem fluidführenden System auf ein Fluid wirkt, das elektrisch leitend ist, beispielsweise Wasser. Mit einem solchen gattungsgemäßen Differenzdrucksensor lässt sich somit zwar grundsätzlich ein entsprechender Differenzdruck messen, doch ist aufgrund des gestaffelten Aufbaus des Differenzdrucksensors und der erforderlichen Anpassung sämtlicher Komponenten des Differenzdrucksensors und deren Verbindung untereinander an die entsprechenden Einsatzbedingungen die Herstellung eines solchen Differenzdrucksensors kostspielig und aufwendig, damit gewährleistet werden kann, dass ein solcher Differenzdrucksensor möglichst fehlerfrei und langlebig zur Messung einer Druckdifferenz verwendet werden kann. In US 3 505 634 A ist ein Differenzdrucksensor mit einer Membran offenbart, die mittels eines ringförmigen Körpers an der Wandung eines Gehäuses befestigt ist, wobei die Membran und der ringförmige Körper einstückig hergestellt sein können und wobei auf der Membran mindestens ein Dehnungsmesssensor angeordnet ist, der durch eine Schutzschicht gegenüber in dem Volumen des Gehäuses vorhandenem Fluid isoliert ist. In US 2011/259 109 A1 ist ein Differenzdrucksensor mit einer Membran offenbart, die an einer Wandung befestigt ist und an der mehrere Dehnungsmesssensoren vorgesehen sind.

Der vorliegenden Erfindung liegt die Aufgabe zugrunde, einen Differenzdrucksensor, und eine Verwendung eines solchen Differenzdrucksensors bereitzustellen, mit dem bzw. der zumindest ein Nachteil gattungsgemäßer Differenzdrucksensoren zumindest teilweise behoben werden kann.

Als eine Lösung der der vorliegenden Erfindung zugrundeliegenden Aufgabe schlägt die Erfindung einen Differenzdrucksensor mit den Merkmalen gemäß Anspruch 1 vor. Der Differenzdrucksensor umfasst ein Gehäuse mit einer Wandung und einer Membran, die sich in einer Horizontalen über einen Membranabschnitt hinweg erstreckt, der eine erste und eine zweite sich horizontal erstreckende flächige Seite aufweist. Die Wandung begrenzt gemeinsam mit der ersten flächigen Seite des Membranabschnitts ein Messvolumen in dem Gehäuse. Die zweite flächige Seite des Membranabschnitts grenzt an ein Referenzvolumen an. Der Differenzdrucksensor weist einen Dehnungsmesssensor auf, der innerhalb des Membranabschnitts an der Membran angeordnet ist. Der Dehnungsmesssensor kann wie oben zu gattungsgemäßen DMS erläutert mehrere Dehnungsmesssensorbauteile aufweisen, die bevorzugt sämtlich innerhalb, insbesondere ausschließlich innerhalb der horizontalen Erstreckung des Membranabschnitts angeordnet sind. Bevorzugt sind zumindest zwei der Dehnungsmesssensorbauteile an voneinander abgewandten vertikalen Seiten des Membranabschnitts angeordnet. Der Membranabschnitt grenzt unmittelbar an die Wandung an, so dass das Messvolumen durch die Wandung und den Membranabschnitt definiert ist. Der Betrag des Messvolumens ist somit definiert über die Erstreckung der ersten flächigen Seite des Membranabschnitts und der Wandung. Die Wandung kann beispielsweise eine Anschlussöffnung aufweisen, die versetzt zu dem Membranabschnitt vorgesehen ist, wobei sich dann selbstverständlich das Messvolumen, das durch Wandung und Membran begrenzt ist, nur bis zur Anschlussöffnung hin erstreckt. Das Referenzvolumen kann ein beliebiges, gegebenenfalls auch unbegrenztes Volumen sein. In einer Ausführungsform kann der Differenzdrucksensor so ausgebildet sein, dass an der zweiten flächigen Seite des Membranabschnitts die Umgebung des Differenzdrucksensors anliegt, beispielsweise Umgebungsluft. In einer Ausführungsform bildet die Wandung gemeinsam mit der zweiten flächigen Seite des Membranabschnitts als Referenzvolumen ein weiteres Messvolumen aus, das bevorzugt eine weitere Anschlussöffnung aufweist, wobei dann analog das weitere Messvolumen wie das erste Messvolumen durch Wandung und Membran begrenzt ist. Bei der zuletzt genannten Ausführungsform kann ein erstes fluidführendes System an das Messvolumen und ein zweites fluidführendes System an das weitere Messvolumen angeschlossen werden, so dass mittels des Differenzdrucksensors eine Druckdifferenz zwischen den Drücken ermittelt werden kann, die in den beiden fluidführenden Systemen bestehen. Bei dem erfindungsgemäßen Differenzdrucksensor weist die Membran neben dem Membranabschnitt ferner einen Verbindungsabschnitt auf, der den Membranabschnitt umlaufend ununterbrochen umschließt, wobei der Membranabschnitt durch den Verbindungsabschnitt umlaufend ununterbrochen abdichtend mit der Wandung verbunden ist. Bei dem erfindungsgemäßen Differenzdrucksensor bildet somit die Membran selbst einen Verbindungsabschnitt aus, der den Membranabschnitt umschließt und der dafür sorgt, dass eine abdichtende Anbindung des Membranabschnitts an der Wandung besteht, so dass kein Fluid ausgehend von dem Messvolumen zwischen Wandung und Membranabschnitt zur zweiten flächigen Seite des Membranabschnitts gelangen kann. Indem die Membran durch den Verbindungsabschnitt mit der Wandung verbunden ist, ist das Vorsehen einer Membranhalterung zur Realisierung einer abdichtenden Verbindung zwischen dem Membranabschnitt und der Wandung nicht mehr erforderlich. Da zudem der Membranabschnitt unmittelbar an die Wandung angrenzt, insbesondere umfänglich geschlossen ununterbrochen um die erste flächige Seite unmittelbar an die Wandung angrenzt, kann darüber hinaus der Membranabschnitt besonders gezielt hinsichtlich seiner Verformbarkeit eingestellt werden. Denn die erste flächige Seite, die eine definierte Fläche aufweist, mit der der Membranabschnitt das Messvolumen begrenzt, kann hierdurch großflächig ausgestaltet sein. Somit ist der Differenzdrucksensor besonders einfach und kostengünstig herstellbar, indem die Membran mit ihrem Verbindungsabschnitt abdichtend mit dem Gehäuse verbunden wird. Die Abdichtung ist bevorzugt dergestalt gewährleistet, dass eine auf die Abdichtung mit einem Druck von 2 bar pressende Luft und/oder ein auf die Abdichtung mit einem Druck von 3 bar pressendes Wasser nicht durch die Abdichtung hindurch gelangen kann. Besonders bevorzugt ist der Verbindungsabschnitt mit der Wandung unmittelbar verbunden, beispielsweise durch eine Pressanlage an der Wandung, insbesondere durch eine entlang der Vertikalrichtung und/oder entlang der Horizontalen wirkende Pressanlage, und/oder durch einen Stoffschluss mit der Wandung und/oder durch Verkleben mit der Wandung. In einer Ausführungsform ist durch die unmittelbare Verbindung die abdichtende Verbindung gewährleistet, in einer anderen Ausführungsform liegt der Verbindungsabschnitt zusätzlich zu seiner unmittelbaren Anlage über einen weiteren Bereich über ein Dichtmittel abdichtend an der Wandung an. Besonders bevorzugt liegt der Verbindungsabschnitt um den Membranabschnitt ununterbrochen umlaufend unmittelbar an der Wandung an oder ist allenfalls durch eine Verbindungsschicht, die eine Schichtdicke von weniger als 0,1 mm, insbesondere weniger als 0,05 mm aufweist, mit der Wandung verbunden und dabei nur durch die Schichtdicke von der Wandung beabstandet. Besonders bevorzugt liegt die Membran ausschließlich mit dem Verbindungsabschnitt angepresst an die Wandung an der Wandung an. Besonders bevorzugt ist der Verbindungsabschnitt um den Membranabschnitt ununterbrochen umlaufend unmittelbar mit dem Membranabschnitt verbunden.

Bei dem erfindungsgemäßen Differenzdrucksensor ist ferner der Dehnungsmesssensor dergestalt an dem Membranabschnitt angeordnet, dass er gegenüber dem Messvolumen fluiddicht isoliert ist. Der Dehnungsmesssensor ist somit dergestalt an dem Membranabschnitt angeordnet, dass ein in dem Messvolumen mit dem über die Differenzdruckmessung zu ermittelnden Druck angeordnetes Fluid, insbesondere Wasser, nicht an den Dehnungsmesssensor gelangen kann. In einer Ausführungsform ist hierzu der Dehnungsmesssensor an der zweiten flächigen Seite des Membranabschnitts angeordnet. Hierzu ist eine Schutzhülle vorgesehen, wie in Anspruch 1 definiert. Der erfindungsgemäße Differenzdrucksensor ermöglicht somit eine besonders einfache und kostengünstige Realisierung eines Differenzdrucksensors, der auch für widrige Umgebungsbedingungen geeignet ist. Denn durch die Isolierung des Dehnungsmesssensors einerseits gegenüber dem Messvolumen und durch die direkte abdichtende Anbindung der Membran selbst an der Wandung lässt sich auf einfache Weise ein Differenzdrucksensor realisieren, dessen Dehnungsmesssensor hinreichend geschützt ist.

In einer Ausführungsform umfasst der Differenzdrucksensor einen weiteren Dehnungsmesssensor, der als Referenzdehnungsmesssensor dient und der dergestalt relativ zum Membranabschnitt angeordnet ist, dass ein von ihm ausgegebenes Messsignal im Wesentlichen unabhängig von der Druckdifferenz ist, die durch den Dehnungsmesssensor des Differenzdrucksensors erfasst wird. Somit erfährt der Referenzdehnungsmesssensor eine nur vernachlässigbare Dehnung, während der Dehnungsmesssensor eine signifikante Dehnung zur Charakterisierung der Druckdifferenz erfährt. Bevorzugt ist der Referenzdehnungsmesssensor ausschließlich in einem solchen Bereich an der Wandung oder der Membran angeordnet, der innerhalb des bestimmungsgemäß vorgesehenen Messbereichs des Differenzdrucksensors weniger als ein Zehntel, insbesondere weniger als ein Fünfzigstel der Dehnung erfährt, die der Membranabschnitt über die Anlagefläche hinweg erfährt, über die hinweg er mit dem Dehnungsmesssensor fest verbunden ist. Beispielsweise kann der Referenzdehnungsmesssensor im Bereich der horizontalen Mitte des Membranabschnitts oder in einem solchen horizontalen Bereich des Membranabschnitts an diesem fest fixiert angeordnet sein, der eine größere vertikale Dicke als ein anderer Bereich des Membranabschnitts aufweist, innerhalb dessen der Dehnungsmesssensor angeordnet ist. Das Vorsehen eines solchen Referenzdehnungsmesssensors ist zur Berücksichtigung von Umgebungsbedingungen, die von der Druckdifferenz unabhängig sind, allgemein vorteilhaft, beispielsweise zur Berücksichtigung von Temperatur-, Verschmutzungs- oder Alterungseffekten, damit diese Effekte einen möglichst geringen Einfluss auf den als Druckdifferenz ausgegebenen Messwert haben. Bevorzugt werden der Referenzdehnungsmesssensor und der Dehnungsmesssensor beide von einer elektronischen Komponente des Differenzdrucksensors ausgelesen, wobei das von dem Referenzdehnungsmesssensor ausgelesene Messsignal als Referenzsignal verwendet wird zur Vermeidung von Messfehlern. Bevorzugt ist der Referenzdehnungsmesssensor ebenfalls von der Schutzhülle abdichtend eingeschlossen.

Besonders bevorzugt weist die Wandung in einem von dem Membranabschnitt beabstandeten Wandungsabschnitt einen Anschlussstutzen mit einer in das Messvolumen mündenden Anschlussöffnung auf. Die Wandung begrenzt mit diesem Wandungsabschnitt somit das Messvolumen und bildet selbst den Anschlussstutzen mit der Anschlussöffnung aus. Somit kann ein fluidführendes Leitungssystem direkt an den von der Wandung ausgebildeten Anschlussstutzen angeschlossen werden.

Somit ist der Differenzdrucksensor mit seinem von der Wandung direkt ausgebildeten Anschlussstutzen kostengünstig herstellbar und direkt und einfach an ein fluidführendes Leitungssystem anschließbar. Bevorzugt ist der Anschlussstutzen nach Art eines Zylinders ausgebildet. Bevorzugt weist der Anschlussstutzen ein Anschlussgewinde zum Anschrauben eines Rohrverbinders auf und/oder ist zur Aufnahme eines umfänglich geschlossen um die Anschlussöffnung vorgesehenen Pressdrucks von mindestens 3 bar zur Realisierung einer abdichtenden Verpressung eines Anschlussrohres an den Anschlussstutzen ausgebildet. Allgemein bevorzugt ist die Wandung als einstückiges Bauteil hergestellt. Bevorzugt ist die Wandung als Spritzgussbauteil mittels Spritzgießverfahrens hergestellt. Allgemein bevorzugt ist die Wandung mit einem einzigen Herstellverfahrensschritt unmittelbar integral als einteiliges Bauteil hergestellt. Allgemein bevorzugt ist die Wandung nach Art eines Rohres ausgebildet, das das Messvolumen in der Horizontalen umfänglich geschlossen umschließt und sich mit seiner Rohrachse in Vertikalrichtung erstreckt. Allgemein bevorzugt ist die gesamte erste flächige Seite des Membranabschnitts, und insbesondere die gesamte zweite flächige Seite des Membranabschnitts, durchgehend aus einem selben Material hergestellt.

In einer Ausführungsform ist der Verbindungsabschnitt ununterbrochen abdichtend mit der Wandung verbunden, indem er**,** insbesondere lösbar, gegen die Wandung gepresst ist. Hierzu kann der Differenzdrucksensor beispielsweise eine Presseinrichtung umfassen, beispielsweise nach Art einer Klemmeinrichtung, mit der der Verbindungsabschnitt gegen die Wandung gepresst ist**.** Beispielsweise kann die Presseinrichtung eine entlang der Vertikalrichtung wirkende Presskraft zwischen der Wandung und dem Verbindungsabschnitt erzeugen und/oder eine horizontal wirkende Presskraft zwischen der Wandung und dem Verbindungsabschnitt erzeugen, durch die der Verbindungsabschnitt horizontal und somit radial seitlich gegen die Wandung gepresst ist. In einer Ausführungsform weist der Verbindungsabschnitt einen ersten Bereich auf, der mit einer Haltekraft gegen die Wandung gepresst gehalten ist, sowie einen zweiten Bereich, der den Membranabschnitt der Membran umlaufend ununterbrochen umschließt und um den Membranabschnitt ununterbrochen umlaufend abdichtend mit der Wandung verbunden ist, wobei insbesondere der zweite Bereich mit der erläuterten Presskraft gegen die Wandung gepresst ist zum Gewährleisten der abdichtenden Verbindung. Die Haltekraft kann somit eine hinreichende Fixierung der Membran an der Wandung gewährleisten, wohingegen die Presskraft nur eine für die Abdichtung hinreichende Anpressung gewährleistet. Bevorzugt ist der Betrag der Haltekraft größer als der Betrag der Presskraft. Allgemein bevorzugt ist die Presskraft, mit der der Verbindungsabschnitt zum Gewährleisten der erläuterten abdichtenden Anlage an der Wandung gegen die Wandung gepresst ist, unabhängig von einer Haltekraft, mit der die Membran an der Wandung gehalten ist. Beispielsweise kann die Haltekraft den ersten Bereich des Verbindungsabschnitts fest an der Wandung halten, wodurch der zweite Bereich des Verbindungsabschnitts in eine Aufnahme mit definierten geometrischen Abmessungen gezwungen ist, in der er aufgrund seiner geometrischen Abmessungen mit einer Presskraft abdichtend anliegt. Die Presskraft kann insbesondere durch eine elastische Eigenschaft des Verbindungsabschnitts oder einem an der Wandung vorgesehenen Dichtungmittel erzeugt sein, an dem der Verbindungsabschnitt wie erläutert abdichtend anliegt. Die ununterbrochen abdichtende, den Membranabschnitt ununterbrochen geschlossen umlaufende Verbindung des Membranabschnitts mit der Wandung mittels des Verbindungsabschnitts kann somit betreffend die Verbindung des Verbindungsabschnitts mit der Wandung ausschließlich dadurch vorgesehen sein, dass der Verbindungsabschnitt lösbar gegen die Wandung gepresst ist. Allgemein bevorzugt sind Verbindungsabschnitt und Membranabschnitt der Membran gemeinsam als ein einziges Bauteil hergestellt. Hierzu wird der Membranabschnitt und der Verbindungsabschnitt mittels Spritzgießverfahrens hergestellt, beispielsweise mittels Zwei-Komponenten-Spritzgießverfahrens, insbesondere mittels Umspritzens eines ersten Kunststoffbauteils, das den Membranabschnitt zumindest teilweise ausbildet, zur Realisierung eines zweiten Kunststoffbauteils, das den Verbindungsabschnitt ausbildet. In einer Ausführungsform sind zumindest ein die erste und insbesondere auch die zweite flächige Seite des Membranabschnitts ausbildender Teil des Membranabschnitts und der Verbindungsabschnitt in einem einzigen Herstellverfahrensschritt direkt als einstückiges Bauteil hergestellt. einer Ausführungsform sind der Verbindungsabschnitt, mit dem die Membran abdichtend mit der Wandung verbunden ist, und die erste flächige Seite des Membranabschnitts aus einem selben Material hergestellt. Hierdurch kann auf besonders einfache Weise eine Membran umfassend Membranabschnitt und Verbindungsabschnitt hergestellt sein. Bevorzugt wird hierzu ein Material gewählt, aus dem der Verbindungsabschnitt und die erste Seite des Membranabschnitts hergestellt sind, das ein Kunststoff ist, der bevorzugt hinreichend weich ist, um durch reine Verpressung abdichtend mit der Wandung verbunden zu werden. In einer Ausführungsform ist der Verbindungsabschnitt zur Realisierung der abdichtenden Verbindung mit der Wandung unlösbar verbunden, beispielsweise mittels Klebens oder mittels Schweißens.

Erfindungsgemäß weist die Membran einen sich in der Horizontalen erstreckenden Membrankern auf, der zumindest einen Teil des Membranabschnitts ausbildet, d. h. sich zumindest über einen Teil, insbesondere über mindestens 50%, insbesondere über mindestens 80% der flächigen Erstreckung der ersten flächigen Seite des Membranabschnitts in der Horizontalen erstreckt. Der Membrankern ist bevorzugt nach Art einer Platte ausgebildet, die sich mit ihrer Plattenfläche in der Horizontalen erstreckt. Indem der Membrankern zumindest einen Teil des Membranabschnitts ausbildet, verläuft der Membrankern über einen solchen Bereich der Membran, mit dem die Membran das Messvolumen begrenzt und in dem die Membran somit in Abhängigkeit von der erläuterten Druckdifferenz eine Kraft durch das in dem Messvolumen und in dem Referenzvolumen angeordnete und an dem Membranabschnitt an dessen jeweiliger Seite anliegenden Fluid erfährt. Bevorzugt erstreckt sich der Membrankern über die gesamte horizontale Erstreckung des Membranabschnitts. Bevorzugt erstreckt sich der Membrankern innerhalb der horizontalen Erstreckung des Verbindungsabschnitts und somit horizontal über den Membranabschnitt hinaus. Erfindungsgemäß ist der Dehnungsmesssensor an dem Membrankern angeordnet. Der Dehnungsmesssensor ist somit dergestalt mit dem Membrankern verbunden, dass über den Dehnungsmesssensor eine Verformung des Membrankerns erfasst werden kann. Erfindungsgemäß umfasst die Membran eine den Membrankern einschließende Schutzhülle, wobei sich die Schutzhülle über den gesamten Membranabschnitt, d. h. dessen gesamte Erstreckung in der Horizontalen, erstreckt und der Dehnungsmesssensor gemeinsam mit dem Membrankern von der Schutzhülle umschlossen ist.

Dies trägt im besonderen Maße dazu bei, dass die Membran umfassend Schutzhülle, Membrankern, Dehnungsmesssensor und gegebenenfalls zumindest eine elektronische Komponente als separates Bauteil hergestellt werden kann, das anschließend mit der Wandung des Gehäuses verbunden werden kann. Dies ermöglicht einen einzigartigen modularen Aufbau des Differenzdrucksensors, so dass für unterschiedliche Einsatzgebiete unterschiedliche Gehäuse und unterschiedliche Membranen vorgehalten werden können, die dann zur Realisierung eines zweckmäßigen Sensors miteinander verbunden werden können. Erfindungsgemäß bildet die Schutzhülle den Verbindungsabschnitt aus. Somit erstreckt sich die Schutzhülle in der Horizontalen über den Membranabschnitt hinaus und direkt für die abdichtende Verbindung des Membranabschnitts und somit auch des Membrankerns relativ zur Wandung sorgen, so dass mittels des Vorsehens der den Verbindungsabschnitt aufweisenden Schutzhülle das Messvolumen am Übergang zwischen Membran und Wandung abdichtend geschlossen sein kann und somit eine zuverlässige Erzeugung einer Verformung des Membrankerns in Abhängigkeit von der erläuterten Druckdifferenz erreicht werden kann, da aufgrund der abdichtenden Verbindung der den Verbindungsabschnitt ausbildenden Schutzhülle mit der Wandung kein Fluid zwischen Wandung und Membran und auch nicht innerhalb der horizontalen Erstreckung des Membranabschnitts von der ersten flächigen Seite des Membranabschnitts zur zweiten flächigen Seite des Membranabschnitts gelangen kann. Die Schutzhülle ist mittels Spritzgießverfahrens als Umspritzung des Membrankerns hergestellt. Hierdurch kann die Schutzhülle besonders zuverlässig den Membrankern und den an dem Membrankern angeordneten Dehnungsmesssensor vollumfänglich abdichtend umschließend hergestellt sein. In einer Ausführungsform ist der Membrankern aus einem steiferen Material hergestellt als die Schutzhülle und/oder weist die Schutzhülle an beiden vertikalen Seiten des Membrankerns eine vertikale Dicke auf, die geringer ist als eine vertikale Dicke des Membrankerns. Hierdurch kann gewährleistet sein, dass die Ausgestaltung des Membrankerns selbst für seine Verformung wesentlich ist, so dass durch das Anbringen des Dehnungsmesssensors mit einer Anlagefläche direkt an dem Membrankern und das gezielte Vorsehen der Ausgestaltung des Membrankerns gezielt Einfluss auf die mit dem Dehnungsmesssensor in Abhängigkeit von der Druckdifferenz ausgegebenen Signale genommen werden kann, da der Dehnungsmesssensor seine Signale in Abhängigkeit von der Verformung des Membrankerns erzeugt, an dem er angeordnet ist.

In einer Ausführungsform bildet die Schutzhülle eine um den Membranabschnitt umlaufende Abdichtungsfeder oder Abdichtungsnut aus, die korrespondierend zu einer Nut bzw. Feder, die an der Wandung vorgesehen ist, ausgebildet ist, wobei die Schutzhülle mit ihrer Abdichtungsnut bzw. Abdichtungsfeder abdichtend die Feder der Wandung umgreift bzw. in der Nut der Wandung eingepresst ist. Allgemein bevorzugt ist die Schutzhülle durch eine Presseinrichtung lösbar mit der Wandung verpresst an dieser fixiert gehalten.

Die Presseinrichtung kann beispielsweise eine in Vertikalrichtung wirkende Presseinrichtung sein und somit eine in Vertikalrichtung und somit senkrecht zur Horizontalen verlaufende Halte- und/oder Presskraft auf die Schutzhülle zur Wandung hin ausüben, insbesondere an einer vertikalen Stirnseite der Wandung. Hierdurch kann eine modulare Realisierung des Differenzdrucksensors besonders begünstigt sein, insbesondere auch eine Austauschbarkeit der Membran zur Wartung des Differenzdrucksensors. Beispielsweise kann die Presseinrichtung die Schutzhülle mit einer Haltekraft gegen die Wandung gepresst halten, wobei die Haltekraft der Presskraft entspricht, mit der der Verbindungsabschnitt zum Gewährleisten der abdichtenden Anlage gegen die Wandung gepresst ist. Beispielsweise kann die Presseinrichtung die Schutzhülle mit einer Haltekraft gegen die Wandung gepresst halten, wobei hierdurch der Verbindungsabschnitt in einer Zwangsführung relativ zur Wandung geführt ist, in der er eine von dem Betrag der Haltekraft unabhängige Presskraft erfährt. Bevorzugt wirkt die Presseinrichtung auf den oben erläuterten ersten Bereich des Verbindungsabschnitts, wodurch sein zweiter Bereich, der beispielsweise als die erläuterte Abdichtungsnut bzw. Abdichtungsfeder ausgebildet ist, in eine Position gezwungen sein kann, in der er mit einer Presskraft gegen die Wandung abdichtend gepresst ist, wobei die Presskraft beispielsweise durch ein Übermaß der Abdichtungsfeder in der Nut bzw. der Feder in der Abdichtungsnut gewährleistet sein kann. Die Presseinrichtung kann eine herkömmliche Presseinrichtung sein, beispielsweise eine in Vertikalrichtung wirkende Klemmeinrichtung oder eine die Schutzhülle mit dem von ihr ausgebildeten Verbindungsabschnitt horizontal gegen die Wandung verpressende Klemmeinrichtung, beispielsweise ein Sprengring sein. Allgemein bevorzugt erstreckt sich der Membrankern horizontal innerhalb eines Abschnitts der Membran, auf den die Presseinrichtung einwirkt. Hierdurch kann der Membrankern selbst möglichst präzise an der Wandung festgelegt sein, wodurch eine Verformung des Membrankerns in Abhängigkeit von dem Differenzdruck besonders präzise vorgebbar ist. Allgemein bevorzugt ist der Verbindungsabschnitt der Membran unmittelbar gegen die Wandung oder gegen ein an der Wandung vorgesehenes Dichtmittel, beispielsweise einen Dichtring, abdichtend und insbesondere lösbar mit der Wandung verpresst. Hierdurch kann der Aufbau des Differenzdrucksensors besonders vereinfacht sein.

In einer Ausführungsform weist die Membran eine elektronische Komponente zum elektronischen Verarbeiten von aus dem Dehnungsmesssensor ausgelesenen Signalen auf. Insbesondere ist die elektronische Komponente zum Beaufschlagen des Dehnungsmesssensors mit einer durch die elektronische Komponente vorgegebenen Spannung und/oder einem durch die elektronische Komponente vorgegebenen Strom ausgebildet sowie zum Auslesen von elektrischen Eigenschaften des Dehnungsmesssensors, insbesondere des Widerstands des Dehnungsmesssensors durch von dem Dehnungsmesssensor ausgegebene Signale. Die elektronische Komponente kann die oben im Zusammenhang mit einer Auswerteeinheit betreffend gattungsgemäße Differenzdrucksensoren beschriebenen Eigenschaften aufweisen. Die elektronische Komponente umfasst bevorzugt zumindest ein Halbleiterbauteil, beispielsweise ein Transistor. Allgemein bevorzugt umfasst die elektronische Komponente zumindest eine Leiterplatte und mehrere auf der Leiterplatte angeordnete elektronische Bauteile. Die elektronischen Bauteile können beispielsweise zumindest ein Halbleiterbauteil umfassen sowie insbesondere zumindest einen Widerstand, zumindest einen Kondensator und weitere übliche elektronische Bauteile. Bevorzugt ist auf der Leiterplatte ein integrierter Schaltkreis vorgesehen. Bevorzugt ist die elektronische Komponente programmierbar ausgebildet, insbesondere über die Anschlusseinrichtung des Differenzdrucksensors programmierbar ausgebildet, wobei durch die Programmierung eine Einstellung von elektronischen Parametern, insbesondere eines von der elektronischen Komponente realisierten Messzyklus und/oder Auswertealgorithmus, der elektronischen Komponente erfolgen kann. Besonders bevorzugt ist die elektronische Komponente durch eine erste elektrische Leitung mit dem Dehnungsmesssensor verbunden und durch eine zweite elektrische Leitung mit einer von einer Außenseite der Wandung des Gehäuses aus zugänglichen Anschlusseinrichtung verbunden. Somit kann durch die Anschlusseinrichtung ein durch die elektronische Komponente bereits verarbeitetes Signal ausgegeben werden, das durch eine Weiterverarbeitungseinrichtung, die an die Anschlusseinrichtung angeschlossen ist, dargestellt bzw. weiterverarbeitet werden kann. Die Integration der elektronischen Komponente in die Membran hat sich erfindungsgemäß als besonders vorteilhaft erwiesen. Denn hierdurch kann platzoptimiert die elektronische Komponente in der Membran integriert sein, was für den modularen Aufbau des Differenzdrucksensors besonders günstig ist. Darüber hinaus kann eine hinreichend gute Wärmeabfuhr von der elektronischen Komponente gewährleistet sein. Dies kann beispielsweise bei einem Anwendungsfall besonders begünstigt sein, bei dem ein Fluid bestimmungsgemäß in dem Messvolumen angeordnet ist und somit zur Wärmeabfuhr beitragen kann. Darüber hinaus kann die elektronische Komponente gezielt an die übrigen Eigenschaften der Membran angepasst sein, insbesondere betreffend den Dehnungsmesssensor und den Membrankern, so dass mit der Membran und somit der in ihr integrierten elektronischen Komponente ein Bauteil bereitgestellt werden kann, das von einem Anwender unkompliziert direkt an eine Weiterverarbeitungseinrichtung angeschlossen werden kann, da es mit seiner elektronischen Komponente bereits ab Werk kalibriert und zur Ausgabe eines sinnvollen Messwerts für die Druckdifferenz eingerichtet sein kann. An dieser Stelle sei allgemein darauf hingewiesen, dass eine solche elektronische Komponente je nach Komplexität des Differenzdrucksensors zur Bereitstellung unterschiedlichster elektronischer Eigenschaften ausgebildet sein kann. Beispielsweise kann die elektronische Komponente zur Aufbereitung einer Versorgungsspannung, die über die Anschlusseinrichtung anschließbar ist, ausgebildet sein, insbesondere als AC-DC- und/oder DC-AC-Wandler. Die elektronische Komponente kann dazu ausgebildet sein, eine durch die elektronische Komponente vorgegebene Versorgungsspannung an den Dehnungsmesssensor auszugeben und/oder dazu ausgebildet sein, das von dem Dehnungsmesssensor ausgelesene Signal zu konditionieren und/oder dazu ausgebildet sein, Schalt- und/oder Analogsignale zu erzeugen. Bevorzugt ist die elektronische Komponente ferner zur Anbindung an einen Bus programmierbar. Die elektronische Komponente kann somit umfangreiche Eigenschaften aufweisen, und ihre Integration in der Membran kann für den Nutzer des Differenzdrucksensors besonders vorteilhaft sein. An dieser Stelle sei darauf hingewiesen, dass üblicherweise davon abgesehen wird, eine Membran eines Differenzdrucksensors mit für die mechanische Funktion der Membran nicht erforderlichen Komponenten zu belasten. Die Erfinder haben überraschend festgestellt, dass das Vorsehen einer elektronischen Komponente direkt innerhalb des Membranabschnitts, insbesondere an dem Membrankern, besonders vorteilhaft ist, ohne dass die Determinierbarkeit der Verformung des Membranabschnitts wesentlich beeinträchtigt ist, da insbesondere eine Kalibration der gesamten Membran umfassend Dehnungsmesssensor und elektronische Komponente insgesamt erfolgen kann und somit das Ansprechverhalten der Membran auf eine Veränderung der Druckdifferenz insgesamt bei einer Kalibration der Membran umfassend die elektronische Komponente berücksichtigt werden kann. Bevorzugt weist der Differenzdrucksensor nur eine elektronische Komponente auf, in der sämtliche elektronische Bauteile des Differenzdrucksensors enthalten sind.

In einer besonders bevorzugten Ausführungsform weist die Membran die Anschlusseinrichtung auf und ist die Anschlusseinrichtung an einer Seite der Membran von der Außenseite des Gehäuses aus zugänglich angeordnet. Bevorzugt ist die Anschlusseinrichtung unmittelbar benachbart zu einem Außenseitenabschnitt des Gehäuses oder zu einem unmittelbar an einen benachbarten Außenseitenabschnitt des Gehäuses angrenzenden Außenseitenabschnitt der Membran angeordnet. Somit ist keine komplizierte Anschlussleitungsführung zu einer an dem Gehäuse vorgesehenen Anschlusseinrichtung erforderlich, sondern die Anschlusseinrichtung kann in die Membran integriert sein. Dies vereinfacht die Führung elektrischer Leitungen von der elektronischen Komponente durch einen Abschnitt der Membran hindurch bis zur Anschlusseinrichtung der Membran. Die Anschlusseinrichtung ist bevorzugt unmittelbar an die Schutzhülle angrenzend vorgesehen. Besonders bevorzugt ist die elektronische Komponente gemeinsam mit dem Dehnungsmesssensor und dem Membrankern in der Schutzhülle eingeschlossen. Somit kann die Schutzhülle Membrankern, Dehnungsmesssensor und elektronische Komponente gemeinsam gegenüber einer sich um die Schutzhülle herum erstreckenden Umgebung abdichten. Dies kann einer Beschädigung der elektronischen Komponente, des Dehnungsmesssensors und des Membrankerns besonders gut vorbeugen. Darüber hinaus ist hierdurch eine einfache Handhabbarkeit der Membran insgesamt ohne Beschädigung ihrer Komponenten ermöglicht, wodurch die modulare Realisierbarkeit des Differenzdrucksensors besonders begünstigt ist.

Allgemein bevorzugt weist die elektronische Komponente zumindest eine Leiterplatte und mehrere auf der Leiterplatte angeordnete elektronische Bauteile auf. Allgemein bevorzugt ist die elektronische Komponente horizontal beabstandet von dem Dehnungsmesssensor angeordnet. Allgemein bevorzugt weist die elektronische Komponente eine erste und eine zweite Leiterplatte auf, auf der jeweils mehrere elektronische Bauteile angeordnet sind, wobei die erste Leiterplatte an einer ersten vertikalen Seite des Membrankerns angeordnet ist und die zweite Leiterplatte an einer zweiten, von der ersten vertikal wegweisenden Seite des Membrankerns angeordnet ist. Durch das Vorsehen von zwei Leiterplatten an den beiden vertikalen Seiten des Membrankerns kann eine elektronische Komponente mit hoher Komplexität in die Membran integriert sein. An dieser Stelle sei darauf hingewiesen, dass die beiden vertikalen Seiten des Membrankerns selbstverständlich in Vertikalrichtung voneinander weg weisen. Die erste vertikale Seite weist zu dem Messvolumen, die zweite vertikale Seite weist zu dem Referenzvolumen. Indem der Membrankern von der Schutzhülle vollständig umschlossen ist und somit die Schutzhülle eine Kavität ausbildet, in der der Membrankern angeordnet ist, kann hierdurch auch die elektronische Komponente mit den beiden erläuterten Leiterplatten besonders gut von der Schutzhülle abdichtend und somit schützend umschlossen sein. Besonders bevorzugt ist in dem Membrankern eine Durchführung vorgesehen, durch die eine Durchkontaktierung zwischen den beiden Leiterplatten vorgesehen ist. Somit können die beiden Leiterplatten durch eine elektrische Leitung durch den Membrankern hindurch miteinander verbunden sein.

In einer Ausführungsform ist der Dehnungsmesssensor über eine Anlagefläche hinweg mit dem Membranabschnitt, insbesondere dem Membrankern, positionsfest verbunden. Durch die Verbindung mit dem Membranabschnitt bzw. dem Membrankern über die Anlagefläche hinweg kann besonders vorteilhaft sichergestellt sein, dass der Dehnungsmesssensor die entlang der Anlagefläche von dem Membranabschnitt durchgeführte Formänderung aufnimmt, da über die Anlagefläche hinweg die Form des Dehnungsmesssensors durch die Verbindung des Dehnungsmesssensors mit dem Membranabschnitt auf die Form des Membranabschnitts in der Anlagefläche gezwungen wird. Die Anlagefläche beschreibt somit eine Fläche, an der Dehnungsmesssensor und Membranabschnitt aneinander anliegen. Bei dem Vorsehen des Dehnungsmesssensors als umfassend mehrere Dehnungsmesssensorbauteile ist jedes der Bauteile über einen ihm zugeordneten Abschnitt der Anlagefläche hinweg positionsfest mit dem Membranabschnitt, insbesondere dem Membrankern, verbunden. Die Anlagefläche ist somit die gesamte Fläche, über die hinweg der Dehnungsmesssensor positionsfest mit dem Membranabschnitt, insbesondere Membrankern, verbunden ist, wobei bei einer Ausgestaltung des Dehnungsmesssensors als umfassend mehrere Dehnungsmesssensorbauteile die Anlagefläche insbesondere voneinander beabstandete Abschnitte aufweisen kann und die Dehnungsmesssensorbauteile voneinander beabstandet sein können. Bevorzugt weist der Differenzdrucksensor eine Steuereinrichtung auf, die dazu ausgebildet ist, eine Kombination einer radialen mit einer tangentialen Spannungskomponente zu ermitteln, wobei die Spannungskomponenten über die Anlagefläche in dem Differenzdrucksensor in Abhängigkeit von einer Form des Membranabschnitts, insbesondere des Membrankerns, innerhalb der Anlagefläche erzeugt werden. Die Steuereinrichtung kann zumindest teilweise, insbesondere vollständig von der Membran umfasst sein, beispielsweise kann die Steuereinrichtung zumindest teilweise, insbesondere vollständig durch die elektronische Komponente der Membran ausgebildet sein. Die radiale und die tangentiale Spannungskomponente sind mechanische Spannungskomponenten, d. h. definieren jeweils die mechanische Spannung im Membranabschnitt, die durch eine Verformung bzw. Dehnung des Membranabschnitts aufgrund einer Druckbelastung des Membranabschnitts wegen einer Druckdifferenz, die ungleich Null ist, in einer radialen bzw. tangentialen Richtung erzeugt ist. Radiale und tangentiale Richtung stehen dabei senkrecht aufeinander. Somit sind allgemein radiale und tangentiale Spannungskomponente Komponenten der innerhalb der Anlagefläche am Membranabschnitt erzeugten mechanischen Spannungen in aufeinander senkrecht stehenden Richtungen, die entlang der Anlagefläche und somit entlang des Oberflächenabschnitts des Membranabschnitts, an dem der Dehnungsmesssensor positionsfest fixiert ist, und somit zumindest im Wesentlichen senkrecht zur durch die Druckdifferenz auf den Membranabschnitt erzeugten Kraft verlaufen.

Die Erfinder haben festgestellt, dass das Ermitteln von radialer und tangentialer Spannungskomponente für die Ermittlung einer Druckdifferenz mittels des Dehnungsmesssensors besonders vorteilhaft ist, da auf Basis einer Kombination von radialer und tangentialer Spannungskomponente und somit deren gemeinsamer Berücksichtigung ein Messwert für die Druckdifferenz ausgegeben werden kann, der eine weitreichende Unabhängigkeit von der Art, insbesondere Veränderung der Art, der Halterung der Membran an der Wandung des Differenzdrucksensors gewährleistet. Insbesondere ist die Kombination eine Differenzbildung zwischen radialer und tangentialer Spannungskomponente. Die Steuereinrichtung ist somit bevorzugt dazu ausgebildet, als Messwert für eine Druckdifferenz zwischen einem ersten, in dem Messvolumen an der ersten flächigen Seite des Membranabschnitts vorliegenden Druck und einem zweiten, in dem Referenzvolumen an der zweiten flächigen Seite des Membranabschnitts vorliegenden Druck einen aus einer Kombination der radialen Spannungskomponente mit der tangentialen Spannungskomponente ermittelten Funktionswert auszugeben. Die Kombination, insbesondere Differenzbildung, zwischen radialer und tangentialer Spannungskomponente kann in einer Ausführungsform beispielsweise dadurch erfolgen, dass diese Spannungskomponenten zunächst einzeln erfasst werden und anschließend elektronisch miteinander verrechnet werden, in einer anderen Ausführungsform beispielsweise dadurch erfolgen, dass am Dehnungsmesssensor direkt eine Kombination, insbesondere Differenz, zwischen den Spannungskomponenten abgegriffen wird. Bei der zuletzt genannten Ausführungsform ist das gezielte Vorsehen einer geometrischen Ausgestaltung des Dehnungsmesssensors zusammen mit dem gezielten Vorsehen von Abgriffspunkten vorteilhaft. Als besonders bevorzugt hat sich für die zuletzt genannte Ausführungsform die Verwendung eines Siliziumkristall-Dehnungsmesssensors herausgestellt, von dem auf einfache Weise direkt eine Differenz zwischen den Spannungskomponenten abgegriffen werden kann. Radiale und tangentiale Spannungskomponente geben jeweils einen Wert der Spannung in radialer bzw. tangentialer Richtung an. Die Erfinder haben festgestellt, dass durch eine entsprechende Bildung des Funktionswerts aus der Kombination von radialer und tangentialer Spannungskomponente durch die Steuereinrichtung ein Messwert ausgegeben werden kann, der im Wesentlichen unabhängig von Temperaturschwankungen und unabhängig von der Art der Lagerung der Membran an der Wandung die Druckdifferenz präzise angeben kann. Das bei üblichen Differenzdrucksensoren vorhandene Problem, dass ein thermisch induziertes Ausdehnungsverhalten der verschiedenen Komponenten des Differenzdrucksensors zu einem temperaturabhängigen Fehler des Messwerts für die Druckdifferenz führt, kann damit zumindest im Wesentlichen verhindert werden. Darüber hinaus ist hierdurch ermöglicht, die Membran für unterschiedliche Einsatzgebiete jeweils zweckmäßig mit der Wandung zu verbinden, ohne dass hierdurch eine Messungenauigkeit hervorgerufen wird. So ist es beispielsweise möglich, dieselbe Membran zur Realisierung eines ersten Differenzdrucksensors zu verwenden, in dem die Membran nach Art eines Festlagers an der Wandung gehalten ist, so dass sichergestellt ist, dass die Membran am Übergang zur Gehäusewand mit der Gehäusewand einen stets festgelegten Winkel, insbesondere ein Winkel von 90°, bildet, und darüber hinaus ist es möglich, die Membran zur Realisierung eines zweiten Differenzdrucksensors zu verwenden, bei dem die Membran nach Art eines Loslagers relativ zur Wandung fixiert gehalten ist, d. h. bei dem die Membran an ihrem Übergang zur Wandung einen von der Druckdifferenz abhängigen, jeweils unterschiedlichen Winkel zur Wandung ausbilden kann. Dabei ist zu berücksichtigen, dass gerade bei temperatur- und/oder alterungsbedingten Veränderungen von Materialeigenschaften von Membran und Wandung eine Veränderung der Art der Lagerung eintreten kann, insbesondere dann, wenn die Wandung aus Kunststoff hergestellt ist. Die erfindungsgemäß vorteilhafte Kombination von tangentialer und radialer

Spannungskomponente zum Ermitteln der Druckdifferenz ermöglicht somit eine möglichst fehlerfreie Ermittlung der Druckdifferenz auch bei schwankenden Einsatzbedingungen bzw. Alterung des Differenzdrucksensors und ist insbesondere im Zusammenhang mit der Herstellung der Wandung bzw. des Gehäuses aus Kunststoff besonders vorteilhaft. Denn die Erfinder haben erkannt, dass durch die Kombination der radialen mit der tangentialen Spannungskomponente, insbesondere durch Differenzbildung zwischen diesen Spannungskomponenten, eine präzise Angabe der Dehnung des Membranabschnitts insgesamt innerhalb der Anlagefläche gegeben werden kann, wohingegen die radiale bzw. tangentiale Spannungskomponente für sich alleine genommen von dem Umgebungsbedingungen, insbesondere den oben genannten Umgebungsbedingungen, erheblich abhängen, so dass für unterschiedliche Umgebungsbedingungen eine stets andere Kalibrierung bzw. Justage der Membran mit Dehnungsmesssensor und bevorzugt darin verwendeter elektronischer Komponente erforderlich ist. Eine solche Neukalibrierung bzw. Nachjustage kann jedoch bei der Verwendung eines Differenzdrucksensors in eine Umgebung, die veränderbar ist, nicht stets gewährleistet sein. Daher ermöglicht die besonders vorteilhafte Ausführungsform auf einfache Weise eine zuverlässige Ermittlung der erläuterten Druckdifferenz. Zur Ermittlung der radialen und tangentialen Spannungskomponente über die Anlagefläche hinweg kann beispielsweise ein Dehnungsmessstreifen vorgesehen sein, der verschiedene Streifenabschnitte aufweist, die in aufeinander senkrecht stehenden Richtungen in Abhängigkeit von einer Verformung des Streifens unterschiedliche Formen annehmen können und dabei unterschiedliche Widerstände ausbilden können. In einer besonders bevorzugten Ausführungsform ist der Dehnungsmesssensor als Siliziumkristall-Dehnungsmesssensor ausgebildet.

In einer besonders bevorzugten Ausführungsform umfasst der Differenzdrucksensor eine Brückenschaltung mit vier Brückenschaltungskomponenten. Eine solche Brückenschaltung ist im Stand der Technik absolut gängig. Eine solche Brückenschaltung weist mindestens zwei Arme auf, die zueinander parallel geschaltet sind, wobei jeder der Arme mindestens zwei in Reihe geschaltete, als Brückenschaltungskomponente ausgebildete elektronische Bauteile und in Reihe dazwischen einen Abgriff umfasst. Die Brückenschaltungskomponenten weisen jeweils einen Wert auf, den sie in die Brückenschaltung ausgeben. Beispielsweise ist bekannt, solche Brückenschaltungskomponenten als Widerstandskomponenten auszugestalten, wobei ein jeder der Widerstände der Ausgabe eines Werts der Brückenschaltungskomponente dient und durch die Brückenschaltung die Werte der vier Brückenschaltungskomponenten gegeneinander elektronisch ausgerechnet werden, um ein möglichst fehlerfreies und hinreichend großes Messsignal zu erzeugen. Bei der vorliegenden Ausführungsform ist jede der Brückenschaltungskomponenten dazu ausgebildet, eine Kombination von einer über einen ihr jeweils zugeordneten Anlageflächenabschnitt des Dehnungsmesssensors an dem Membranabschnitt erzeugten radialen und tangentialen Spannungskomponente zu erfassen und einen sich aus dieser Kombination ergebenden Funktionswert als Wert der Brückenschaltungskomponente in der Brückenschaltung auszugeben. In einer Ausführungsform ist jeder der Brückenschaltungskomponenten derselbe Anlageflächenabschnitt zugeordnet, in einer anderen Ausführungsform sind zumindest einigen der Brückenschaltungskomponenten ein jeweils anderer Anlageflächenabschnitt zugeordnet, in einer Ausführungsform unterscheiden sich sämtliche Anlageflächenabschnitte, die den unterschiedlichen Brückenschaltungskomponenten zugeordnet sind. Wesentlich ist, dass der Dehnungsmesssensor in der Anlagefläche wie oben erläutert mit dem Membranabschnitt bzw. Membrankern verbunden ist, damit über die radiale und tangentiale Spannungskomponente die Verformung bzw. Dehnung des Membranabschnitts bzw. Membrankerns innerhalb der Anlagefläche ermittelt werden kann. Das Vorsehen einer solchen Brückenschaltung hat sich als besonders vorteilhaft herausgestellt, da hierdurch die Brückenschaltungskomponenten jeweils aufgrund der Kombination der tangentialen mit der radialen Spannungskomponente, insbesondere der Differenzbildung zwischen tangentialer und radialer Spannungskomponente, eine wie oben erläutert möglichst umgebungsunabhängig präzise Angabe der Druckdifferenz machen kann. Indem die Ausgaben der vier Brückenschaltungskomponenten in eine Brückenschaltung eingegeben werden, kann ein möglichst großes Messsignal aus der Brückenschaltung entnommen werden, das die erläuterte Druckdifferenz charakterisiert. Beispielsweise kann die Subtraktion bzw. Differenzbildung von radialer und tangentialer Spannungskomponente durch elektrotechnische Subtraktion, beispielsweise durch die elektrotechnische Differenzschaltung, oder durch direkten Abgriff am Dehnungsmesssensor erreicht werden.

In einer Ausführungsform weist der Differenzdrucksensor eine als Stecker oder Buchse ausgebildete elektronische Anschlusseinrichtung auf, die elektrisch mit dem Dehnungsmesssensor verbunden ist und von einer Außenseite der Wandung des Gehäuses aus, die dem durch Wandung und Membranabschnitt begrenzten Volumen abgewandt ist, zugänglich ist. Die Anschlusseinrichtung kann der oben erläuterten Anschlusseinrichtung entsprechen, entsprechend kann die Außenseite der oben erläuterten Außenseite entsprechen. Die elektrische Verbindung der Anschlusseinrichtung mit dem Dehnungsmesssensor kann beispielsweise unmittelbar oder beispielsweise mittels der elektronischen Komponente erfolgen. Indem die Anschlusseinrichtung mit der elektronischen Komponente verbunden ist, die ihrerseits mit dem Dehnungsmesssensor verbunden ist, kann über die Anschlusseinrichtung eine Energieversorgung der elektronischen Komponente der Membran bereitgestellt sein und darüber hinaus über eine handelsübliche, korrespondierende Anschlusseinrichtung, die entsprechend als Buchse oder Stecker ausgebildet ist, die elektronische Komponente gespeist und benutzerfreundlich ausgelesen werden. Somit kann der Differenzdrucksensor durch die Anschlusseinrichtung an eine Weiterverarbeitungseinrichtung angeschlossen werden, die einen Wert für die Druckdifferenz anzeigt und/oder diesen anderweitig weiterverarbeitet. Allgemein besonders bevorzugt weist die Membran die Anschlusseinrichtung auf. Allgemein besonders bevorzugt ist die Anschlusseinrichtung an einer Seite der Membran von der Außenseite des Gehäuses aus zugänglich angeordnet.

In einer Ausführungsform ist der Dehnungsmesssensor innerhalb eines horizontalen Abschnitts des Membranabschnitts an diesem angeordnet, in dem der Membranabschnitt eine geringere Steifigkeit aufweist als in an diesen Abschnitt angrenzenden horizontalen Abschnitten. Bevorzugt ist dieser horizontale Abschnitt, innerhalb dessen der Dehnungsmesssensor angeordnet ist, horizontal umfänglich umschlossen ausschließlich von solchen Abschnitten umgeben, die eine höhere Steifigkeit als dieser horizontale Abschnitt aufweisen. Bevorzugt sind sowohl der genannte horizontale Abschnitt, in dem der Dehnungsmesssensor angeordnet ist, als auch sämtliche ihn umgebenden und dabei unmittelbar an ihn angrenzend Abschnitte von dem Membrankern ausgebildet.

Beispielsweise kann der genannte horizontale Abschnitt eine geringere Steifigkeit aufweisen, indem er eine geringere vertikale Dicke aufweist und/oder indem er aus einem anderen Material hergestellt ist als die an ihn unmittelbar angrenzenden horizontalen Abschnitte. Nichtsdestotrotz kann selbstverständlich der genannte horizontale Abschnitt integral einstückig mit den ihn umgebenden horizontalen Abschnitten hergestellt sein, beispielsweise mittels Spritzgießverfahrens. Insbesondere kann der genannte horizontale Abschnitt dadurch realisiert sein, dass der Dehnungsmesssensor auf horizontaler Höhe einer in dem Membranabschnitt vorgesehenen Ausnehmung, insbesondere an einem Rand dieser Ausnehmung, angeordnet ist. Die Ausnehmung kann beispielsweise stufenförmig in dem Membranabschnitt vorgesehen sein, so dass der Membranabschnitt auf Höhe der Ausnehmung eine sich stufenartig verringernde vertikale Dicke aufweist. Der Dehnungsmesssensor ist bevorzugt innerhalb, insbesondere ausschließlich innerhalb der horizontalen Erstreckung des Grundes der Ausnehmung angeordnet. Eine Anordnung nahe des Randes der Ausnehmung kann besonders vorteilhaft sein, da am Rand der Ausnehmung eine besonders große Dehnung erfolgen kann. Allgemein bevorzugt ist der Dehnungsmesssensor von dem Verbindungsabschnitt horizontal beabstandet angeordnet. Die Veränderung der Steifigkeit kann durch entsprechend geänderte, wie oben erläuterte, Ausgestaltung des Membrankerns und/oder der Schutzhülle ausgebildet sein. Besonders bevorzugt ist der Dehnungsmesssensor von dem Verbindungsabschnitt, mit dem die Membran an der Wandung anliegt, um mindestens 5%, insbesondere mindestens 10%, insbesondere mindestens 20% einer minimalen Erstreckung der Membran in der Horizontalen beabstandet, wobei die minimale Erstreckung der Membran in der Horizontalen durch die Erstreckungslänge der Membran in einer bestimmten horizontalen Richtung definiert ist, in der die Membran ihre geringste horizontale Erstreckung aufweist.

In einer Ausführungsform ist die Membran als separate Einheit unabhängig von dem Gehäuse hergestellt und als separat hergestellte Einheit mit dem Gehäuse verbunden. Bevorzugt ist die Membran mit dem Gehäuse lösbar verbunden, beispielsweise durch die oben erläuterte Presseinrichtung. Hierdurch kann der modulare Aufbau des Differenzdrucksensors besonders begünstigt sein, da die Membran unabhängig von dem Gehäuse bereitgehalten sein kann, insbesondere mit den zu verschiedenen Ausführungsformen von ihr umfassten vorteilhaften Komponenten, so dass die Membran gezielt zur Realisierung eines Differenzdrucksensors für ein bestimmtes Einsatzgebiet mit einem hierzu geeigneten Gehäuse verbunden sein kann. Beispielsweise kann das Gehäuse hierzu einen für das Einsatzgebiet geeigneten Anschlussstutzen aufweisen.

In einer Ausführungsform weist das Gehäuse einen ersten und einen zweiten Gehäuseteil auf. In einer Ausführungsform bilden die Gehäuseteile gemeinsam die Wandung aus, in einer anderen Ausführungsform umfasst der erste Gehäuseteil die Wandung und umfasst der zweite Gehäuseteil eine weitere Wandung. Bei der zuerst genannten Ausführungsform bildet die Membran gemeinsam mit der Wandung das Messvolumen und das Referenzvolumen aus, wobei die Membran das Messvolumen von dem Referenzvolumen trennt, wohingegen bei der zuletzt genannten Ausführungsform die Membran gemeinsam mit der Wandung das Messvolumen und gemeinsam mit der weiteren Wandung das Referenzvolumen begrenzt. Bei der zuerst genannten Ausführungsform sind die Gehäuseteile in der Horizontalen nebeneinander angeordnet, so dass sie jeweils einen horizontalen Abschnitt der Wandung ausbilden, wohingegen in der zuletzt genannten Ausführungsform die Gehäuseteile in Vertikalrichtung nebeneinander angeordnet sind. Erster und zweiter Gehäuseteil sind bei der beschriebenen Ausführungsform als separate Bauteile ausgebildet. Die Membran ist zwischen den beiden Gehäuseteilen angeordnet. Das Messvolumen und das Referenzvolumen sind durch die Membran voneinander getrennt. Bevorzugt ist die Membran an beiden Gehäuseteilen abdichtend anliegend gehalten. Die Membran kann beispielsweise dergestalt zwischen den beiden Gehäuseteilen angeordnet sein, dass die beiden Gehäuseteile nicht unmittelbar aneinander anliegen sondern nur mittelbar über die Membran aneinander anliegen. Bevorzugt liegt der Membranabschnitt mit dem seine erste flächige Seite ununterbrochen umlaufend umschließenden Verbindungsabschnitt an der Wandung abdichtend an und mit einem weiteren Verbindungsabschnitt, der seine zweite flächige Seite ununterbrochen umlaufend umschließt, abdichtend an der weiteren Wandung an. Bevorzugt weisen die beiden flächigen Seiten in entgegengesetzte Richtungen entlang der Vertikalrichtung und weisen die beiden Verbindungsabschnitte in entgegengesetzte Richtungen entlang der Vertikalrichtung. Durch das Vorsehen der beiden Gehäuseteile kann gezielt die Membran zwischen für das jeweilige Anwendungsgebiet geeigneten Gehäuseteilen angeordnet werden und abdichtend mit den beiden Gehäuseteile, insbesondere der Wandung des ersten Gehäuseteils und der weiteren Wandung des zweiten Gehäuseteils, verbunden werden, so dass Referenzvolumen und Messvolumen mittels der Gehäuseteile an fluidführende Leitungssysteme angeschlossen werden können, zwischen denen eine Druckdifferenz ermittelt werden soll. Besonders bevorzugt bildet die Wandung eine Anschlussöffnung, insbesondere die oben erläuterte Anschlussöffnung, aus und bildet die weitere Wandung eine weitere Anschlussöffnung aus, so dass Wandung und weitere Wandung jeweils eine Anschlussöffnung ausbilden. Die Anschlussöffnung, die die jeweilige Wandung ausbildet, mündet in das von der jeweiligen Wandung begrenzte Volumen, d. h**.** mit Bezug auf die Wandung in das Messvolumen und mit Bezug auf die weitere Wandung des Referenzvolumens. Bevorzugt können die Wandung und die weitere Wandung jeweils einen wie oben erläuterten Anschlussstutzen aufweisen, der die Anschlussöffnung umschließt und zum Anschließen an ein fluidführendes Leitungssystem ausgebildet ist, oder alternativ können die Gehäuseteile in einer Ausführungsform, in der sie zusammen die Wandung ausbilden, sowohl einen Anschlussstutzen für das Messvolumen als auch einen Anschlussstutzen für das Referenzvolumen ausbilden. In einer besonders bevorzugten Ausführungsform ist der Verbindungsabschnitt der Membran zwischen den beiden Gehäuseteilen mit einer Haltekraft gegen die Wandung gepresst und mit einer von der Haltekraft unmittelbar verursachten Presskraft oder mit einer von dem Betrag der Haltekraft unabhängigen Presskraft abdichtend gegen die Wandung gepresst, insbesondere lösbar gegen die Wandung gepresst. Besonders bevorzugt ist hierzu eine Presseinrichtung vorgesehen, die eine Haltekraft in Vertikalrichtung und/oder einer Horizontalrichtung zwischen den beiden Gehäuseteilen ausübt, wobei aufgrund der Anordnung der Membran zwischen den Gehäuseteilen diese Halte- oder Presskraft entsprechend zwischen dem Verbindungsabschnitt und der Wandung wirkt. Wie erläutert kann die zwischen den Gehäuseteilen wirkende Haltekraft direkt ein abdichtendes Verpressen des Verbindungsabschnitts gegen beide Gehäuseteile bewirken, oder kann dadurch, dass die Haltekraft die Gehäuseteile in einer festgelegten Position zueinander hält, der Verbindungsabschnitt insgesamt oder zumindest der oben erläuterte zweite Bereich des Verbindungsabschnitts, in einer durch die Gehäuseteile gemeinsam gebildeten Zwangsführung geführt gehalten sein, in der er mit einer Presskraft gegen beide Gehäuseteile abdichtend anliegt. In einer Ausführungsform, in der der erste Gehäuseteil die Wandung und der zweite Gehäuseteil die weitere Wandung ausbildet, weist die Membran einen von dem Verbindungsabschnitt beabstandeten weiteren Verbindungsabschnitt auf, der durch die Haltekraft gegen die weitere Wandung gepresst ist und mit einer Presskraft an dieser abdichtend anliegt. Als eine Haltekraft wird vorliegend eine Kraft bezeichnet, die den Verbindungsabschnitt lediglich zum Halten an der Wandung und der weiteren Wandung gepresst hält oder die ohne ein von dem Betrag der Haltekraft direkt abhängiges Verpressen des Verbindungsabschnitts die Gehäuseteile zur Fixierung gegeneinander presst, wohingegen die Presskraft direkt zur erläuterten abdichtenden Anlage des Verbindungsabschnitts führt. Wie erläutert kann die Presskraft unabhängig von der Haltekraft sein, indem der Verbindungsabschnitt über einen ersten Bereich hinweg durch die Haltekraft zwischen den Gehäuseteilen verpresst gehalten ist oder der Verbindungsabschnitt durch die mittels der Haltekraft festgelegten Position der Gehäuseteile zueinander in seiner Position relativ zu den Gehäuseteilen festgelegt ist, seine abdichtende Anlage jedoch durch seine festgelegte Position erzwungen ist, insbesondere innerhalb seines zweiten Bereichs erfolgt, der durch das Halten des Verbindungsabschnitts lediglich in eine korrespondierende geometrische Form der Wandung bzw. der Gehäuseteile gezwungen ist, an der er mit einer Presskraft abdichtend anliegt. Verbindungsabschnitt und weiterer Verbindungsabschnitt können wie oben erläutert an voneinander wegweisenden vertikalen Seiten der Membran ausgebildet sein. Insbesondere kann der Verbindungsabschnitt in dieselbe Richtung entlang der Vertikalrichtung wie die erste flächige Seite des Membranabschnitts weisen und der weitere Verbindungsabschnitt in dieselbe Richtung entlang der Vertikalrichtung wie die zweite flächige Seite des Membranabschnitts weisen. Allgemein kann der weitere Verbindungsabschnitt mit der weiteren Wandung wie oben zum Verbindungsabschnitt und der Wandung erläutert verbunden sein. Bevorzugt ist der Betrag der Halte- bzw. Presskraft, mit der der Verbindungsabschnitt gegen die Wandung gepresst ist, identisch mit dem Betrag der Halte- bzw. Presskraft, mit dem der weitere Verbindungsabschnitt gegen die weitere Wandung gepresst ist, wobei die zwischen Verbindungsabschnitt und Wandung wirkende Kraft in entgegengesetzte Richtung weist im Vergleich zu der Kraft, die zwischen dem weiteren Verbindungsabschnitt und der weiteren Wandung wirkt. In einer Ausführungsform dichtet der Verbindungsabschnitt durch die pressende Anlage unmittelbar gegen die Wandung ab. In einer Ausführungsform ist ein Dichtmittel zwischen der Wandung und dem Verbindungsabschnitt vorgesehen, beispielsweise ein um den Membranabschnitt umlaufender Dichtring, ein entsprechendes Dichtmittel kann zwischen dem weiteren Verbindungsabschnitt und der weiteren Wandung vorgesehen sein, wobei das Dichtmittel bevorzugt die zweite flächige Seite des Membranabschnitts, mit der der Membranabschnitt das Referenzvolumen begrenzt, horizontal ununterbrochen geschlossen umläuft.

Offenbart ist ferner ein Set, welches nicht in den Schutzbereich der Ansprüche fällt, zur Realisierung eines erfindungsgemäßen Differenzdrucksensors. Das Set umfasst ein Gehäuse und eine Membran sowie ein weiteres Gehäuse, das sich in seiner Ausgestaltung von dem Gehäuse unterscheidet, und/oder eine weitere Membran, die sich in ihrer Ausgestaltung von der Membran unterscheidet. Gehäuse und weiteres Gehäuse können sich beispielsweise durch den von ihrer Wandung ausgebildeten Anschlussstutzen unterscheiden und/oder durch den lichten Querschnitt ihrer Anschlussöffnung und/oder durch das Material, aus dem die Wandung hergestellt ist und/oder durch die Grenzfläche, mit dem sie jeweils im mit der Membran zusammengebauten Zustand, in dem ein Differenzdrucksensor realisiert ist, das Messvolumen begrenzen. Die Membran und die weitere Membran können sich beispielsweise in ihrem Membrankern, ihrer horizontalen Erstreckung, dem Material, aus dem sie hergestellt sind und/oder in ihrem Verbindungsabschnitt unterscheiden. Es sind verschiedene Betriebszustände des Sets realisierbar. In einem Betriebszustand des Sets ist ein erfindungsgemäßer Differenzdrucksensor ausgebildet, in dem die Membran mit dem Gehäuse abdichtend verbunden ist, wie dies oben zu verschiedensten Ausführungsbeispielen ausführlich erläutert ist. In einem ersten weiteren Betriebszustand des Sets ist ein erster weiterer erfindungsgemäßer Differenzdrucksensor realisiert, in dem die Membran mit dem weiteren Gehäuse abdichtend verbunden ist. Zusätzlich oder alternativ ist in einem zweiten weiteren Betriebszustand des Sets ein zweiter weiterer erfindungsgemäßer Differenzdrucksensor realisiert, in dem die weitere Membran mit dem Gehäuse abdichtend verbunden ist. Alternativ oder zusätzlich ist in einem dritten weiteren Betriebszustand des Sets ein dritter weiterer erfindungsgemäßer Differenzdrucksensor realisiert, in dem die weitere Membran mit dem weiteren Gehäuse abdichtend verbunden ist. In jedem der erläuterten Betriebszustände ist der realisierte Differenzdrucksensor erfindungsgemäß ausgebildet, so dass die jeweilige Membran und das jeweilige Gehäuse, die zur Realisierung des jeweiligen erfindungsgemäßen Differenzdrucksensors miteinander verbunden sind, wie zu einem der oben erläuterten Ausführungsbeispiele ausgestaltet und miteinander verbunden sind. Bevorzugt ist in zumindest einigen der Betriebszustände die jeweilige Membran mit dem jeweiligen Gehäuse lösbar verbunden, insbesondere durch die oben erläuterte Presseinrichtung. Das Set ermöglicht die kostengünstige und flexible Realisierung eines modular aufgebauten Differenzdrucksensors, da je nach den für das jeweilige Einsatzgebiet sich ergebenden Anforderungen gezielt eine der Membranen des Sets und ein Gehäuse des Sets, die zueinander korrespondierend ausgebildet sind, ausgewählt werden können und zur Realisierung eines erfindungsgemäßen Differenzdrucksensors miteinander verbunden werden können. In einer Ausführungsform ist die Membran in einem der Betriebszustände nach Art eines Festlagers mit dem Gehäuse verbunden und in einem anderen der Betriebszustände des Sets nach Art eines Loslagers mit dem Gehäuse oder dem weiteren Gehäuse des Sets verbunden, wobei in jedem der Betriebszustände ein erfindungsgemäßer Differenzdrucksensor realisiert ist. Die Membran kann somit modular zur Realisierung eines Differenzdrucksensors eingesetzt werden, wobei Festlager und Loslager je nach Kopplung zwischen Membran und Gehäuse vorgesehen sein können. Das Set umfasst in einer besonders bevorzugten Ausführungsform zumindest zwei weitere Gehäuse, wobei die Membran sowohl an dem Gehäuse als auch an jedem weiteren der Gehäuse abdichtend anordenbar ist zur Realisierung eines Betriebszustands, in dem jeweils ein erfindungsgemäßer Differenzdrucksensor realisiert ist. In einer besonders bevorzugten Ausführungsform weist das Set die Membran und zumindest zwei weitere Membranen auf, wobei das Gehäuse mit jeder dieser Membranen abdichtend verbindbar ist zur Realisierung eines Betriebszustands des Sets, in dem jeweils ein erfindungsgemäßer Differenzdrucksensor realisiert ist. Die Betriebszustände beschreiben jeweils eine bestimmte Anordnung der Komponenten des Sets zueinander und somit eine Eignung der jeweiligen Komponenten, zum Erreichen des jeweiligen Betriebszustands verwendet zu werden. Das Set kann mehrere identisch ausgebildete Membranen und/oder mehrere identisch ausgebildete weitere Membranen und/oder mehrere identisch ausgebildete Gehäuse und/oder mehrere identisch ausgebildete weitere Gehäuse aufweisen, so dass die Differenzdrucksensoren gemäß den unterschiedlichen Betriebszuständen gleichzeitig mittels des Sets realisierbar sind.

Offenbart ist ferner die Verwendung eines vorliegend offenbarten Sets, die nicht in den Schutzbereich der Ansprüche fällt. Zur Realisierung des Differenzdrucksensors wird die Membran mit dem Gehäuse nach Art eines Loslagers oder eines Festlagers verbunden. Bevorzugt wird nach dem Verbinden der Membran mit dem Gehäuse eine Kalibriereinheit an einer von einer Außenseite des Gehäuses zugänglichen Anschlusseinrichtung angeschlossen, die mit einer von der Membran umfassten, mit dem Dehnungsmesssensor elektrisch verbundenen elektronischen Komponente elektrisch verbunden ist. Nach dem Anschließen der Kalibriereinheit an die Anschlusseinrichtung wird anschließend der Differenzdrucksensor justiert. Das Justieren umfasst insbesondere das Vorsehen von definierten unterschiedlichen Druckdifferenzen, wie oben erläutert bezogen auf die Differenz zwischen den an erster und zweiter flächiger Seite der Membran vorgesehenen Drücken, und das Auslesen der elektronischen Komponente sowie das Programmieren der elektronischen Komponente, so dass die elektronische Komponente bei einer späteren Verwendung einen korrekten Messwert für die jeweils vorliegende Druckdifferenz ausgibt. Die genannte Verwendung hat sich als besonders vorteilhaft herausgestellt, da hierdurch eine möglichst fehlerfreie Darstellung einer Druckdifferenz durch den Differenzdrucksensor gewährleistet sein kann, die direkt von der Anschlusseinrichtung ausgegeben werden kann.

Die Erfindung betrifft ferner die Verwendung eines erfindungsgemäßen Differenzdrucksensors zum Messen einer Druckdifferenz zwischen zwei fluidführenden Leitungssystemen, wie in Anspruch 13 definiert, wobei ein erstes der Leitungssysteme an das Messvolumen angeschlossen wird und ein zweites der Leitungssysteme an das Referenzvolumen angeschlossen wird, wobei innerhalb der Membran aus dem Dehnungsmesssensor ausgelesene Signale elektronisch verarbeitet werden. Die elektronische Verarbeitung umfasst insbesondere eine Konditionierung des von dem Dehnungsmesssensor ausgegebenen Signals. Die Konditionierung ist eine elektronische Verarbeitung, die beispielsweise eine Verstärkung, eine Konvertierung, beispielsweise Konvertierung zwischen Spannungs- und Stromsignal, einen Abgleich, beispielsweise mit einer festgelegten Kennlinie zur Erzeugung einer Korrektur, und/oder ein Filtern umfassen kann. Bei der erfindungsgemäßen Verwendung werden die aus dem Dehnungsmesssensor ausgelesenen Signale durch eine Anschlusseinrichtung des Differenzdrucksensors an eine externe Weiterverarbeitungseinrichtung ausgegeben. Die Weiterverarbeitungseinrichtung kann beispielsweise eine Anzeigeeinrichtung oder eine Steuerung oder Regelung sein, in der die Signale als Steuer- bzw. Regelparameter verwendet werden. Bei den beschriebenen erfindungsgemäßen Verwendungen können Gehäuse, Membran und Differenzdrucksensor insgesamt wie zu verschiedenen erfindungsgemäßen Ausführungsformen beschrieben ausgebildet sein. Allgemein kann ein erfindungsgemäßer Differenzdrucksensor Merkmale aufweisen, die im Zusammenhang mit gattungsgemäßen Differenzdrucksensoren beschrieben sind. Bei den Leitungssystemen handelt es sich bevorzugt um flüssigkeitsführende Leitungssysteme, insbesondere um wasserführende Leitungssysteme.

Die Erfindung wird nachfolgend unter Bezugnahme auf sechs Figuren anhand von Ausführungsbeispielen näher erläutert. Es zeigen:
- Figur 1:: in einer schematischen Prinzipdarstellung eine erste Ausführungsform eines erfindungsgemäßen Differenzdrucksensors;
- Figur 2:: in einer schematischen Prinzipdarstellung eine zweite Ausführungsform eines erfindungsgemäßen Differenzdrucksensors;
- Figur 3:: in einer schematischen Prinzipdarstellung eine dritte Ausführungsform eines erfindungsgemäßen Differenzdrucksensors;
- Figur 4:: in einer schematischen Prinzipdarstellung eine vierte Ausführungsform eines erfindungsgemäßen Differenzdrucksensors;
- Figur 5:: in einer schematischen Prinzipdarstellung eine fünfte Ausführungsform eines erfindungsgemäßen Differenzdrucksensors;
- Figur 6:: in einer schematischen Prinzipdarstellung eine sechste Ausführungsform eines erfindungsgemäßen Differenzdrucksensors.

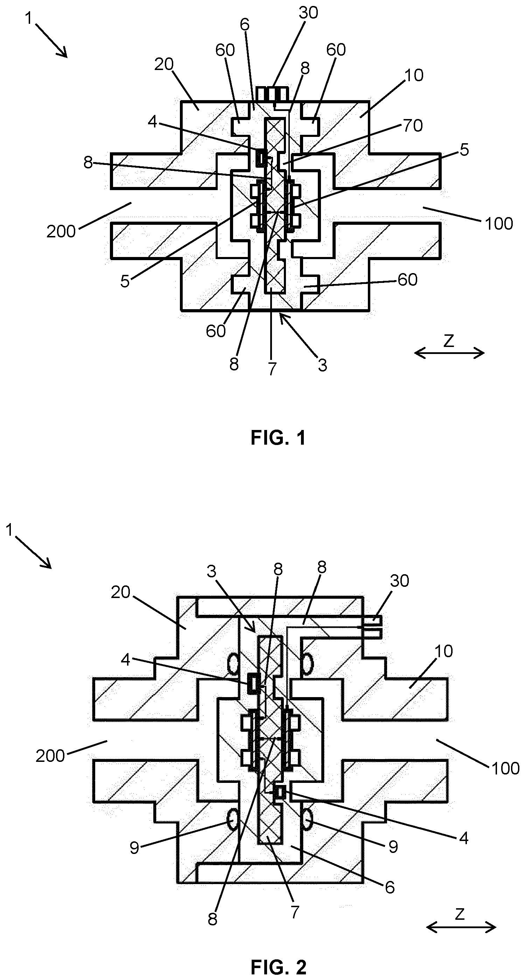

In Figur 1 ist eine Ausführungsform eines erfindungsgemäßen Differenzdrucksensors 1 in einer schematischen Prinzipdarstellung stark vereinfacht dargestellt. Der Differenzdrucksensor 1 gemäß Figur 1 weist ein Gehäuse auf, das einen ersten Gehäuseteil 10 und einen zweiten Gehäuseteil 20 umfasst. Die Gehäuseteile 10, 20 bilden jeweils eine Wandung aus, die nach Art eines sich mit seiner Zylinderachse in Vertikalrichtung Z erstreckenden, abgestuften Zylinders ausgebildet ist. Dieser abgestufte Zylinder weist in einem ersten Zylinderabschnitt, in dem er eine Anschlussöffnung 100, 200 des jeweiligen Gehäuseteils 10, 20 ausbildet, einen geringeren Durchmesser auf als in einem zweiten Abschnitt, an dessen axialem Ende er mit der Membran 3 des Differenzdrucksensors 1 verbunden ist. Die Membran 3 ist in Vertikalrichtung Z zwischen den beiden Gehäuseteilen 10, 20 angeordnet und über eine in Figur 1 nicht dargestellte Presseinrichtung, die vorliegend als in Vertikalrichtung Z wirkende, auf die Stufen der Gehäuseteile 10, 20 aufgesetzte Klemmfeder ausgebildet ist, in Vertikalrichtung Z gegen die Wandungen der Gehäuseteile 10, 20 gepresst. Hierdurch ist eine abdichtende Verbindung zwischen der Membran 3 und den Wandungen der Gehäuseteile 10, 20 sichergestellt, indem die Membran 3 durch die Presseinrichtung zwischen den Gehäuseteilen 10, 20 gepresst gehalten ist und dabei abdichtend an beiden Gehäuseteilen 10, 20 anliegt. Die Membran 3 begrenzt gemeinsam mit der Wandung des ersten Gehäuseteils 10 ein Messvolumen und gemeinsam mit der Wandung des zweiten Gehäuseteils 20 ein Referenzvolumen. Die Anschlussöffnung 100 des ersten Gehäuseteils 10 mündet in das Messvolumen, und die Anschlussöffnung 200 des zweiten Gehäuseteils 20 mündet in das Referenzvolumen. Mit ihren abgestuften Zylinderabschnitten bilden die Gehäuseteile 10, 20 jeweils einen Anschlussstutzen aus, über den an das jeweilige Volumen mittels der jeweiligen Anschlussöffnung 100, 200 jeweils ein Leitungssystem fluidführend angeschlossen werden kann.

Die Membran 3 umfasst einen Membrankern 7, eine elektronische Komponente mit Leiterplatten 5 und darauf angeordneten elektronischen Bauteilen, einen Dehnungsmesssensor 4, eine Anschlusseinrichtung 30 und elektrische Leitungen 8, die eine elektrische Verbindung zwischen dem Dehnungsmesssensor 4 und der elektronischen Komponente einerseits sowie eine elektrische Verbindung zwischen den Leiterplatten 5 andererseits und darüber hinaus eine elektrische Verbindung der elektronischen Komponente mit der Anschlusseinrichtung 30 gewährleisten. Bei der beschriebenen Ausführungsform ist der Dehnungsmesssensor 4 mit einer Anlagefläche an dem Membrankern 7 unmittelbar anliegend angeordnet, was erfindungsgemäß allgemein vorteilhaft ist. Hierdurch kann über den Dehnungsmesssensor 4 eine sich aus einer Verformung des Membrankerns 7 ergebende Dehnung, die innerhalb der Anlagefläche in dem Membrankern 7 erzeugt ist, zuverlässig erfasst werden. Der Membrankern 7 weist eine Ausnehmung 70 auf, wobei der Dehnungsmesssensor 4 innerhalb der horizontalen Erstreckung der Ausnehmung 70 angeordnet ist. Auf Höhe der Ausnehmung 70 weist der Membrankern 7 eine geringere vertikale Dicke als in daran angrenzenden horizontalen Abschnitten auf, so dass der Membrankern 7 bei einer Druckdifferenz zwischen den Drücken, die in dem Messvolumen einerseits und in dem Referenzvolumen andererseits vorliegen, gerade auf Höhe der Anlagefläche, an der der Dehnungsmesssensor 4 mit ihm verbunden ist, einen besonders großen Anteil seiner Verformung erfährt.

Der Membrankern 7, der Dehnungsmesssensor 4, die elektronische Komponente und die elektrischen Leitungen 8 sind gemeinsam vollständig von einer Schutzhülle 6 umschlossen, die ebenfalls von der Membran 3 umfasst ist. Hierdurch ist eine fluiddichte Isolierung der genannten Komponenten gewährleistet. Die Schutzhülle 6 ist aus einem weicheren Material hergestellt als der Membrankern 7, so dass eine Verformung der Membran 3 im Wesentlichen durch die geometrische Ausgestaltung des Membrankerns 7 bedingt ist, was erfindungsgemäß allgemein vorteilhaft ist. Die Anschlusseinrichtung 30 ist direkt an der Schutzhülle 6 der Membran 3 vorgesehen. Hierdurch kann die elektrische Leitung 8 bis zur Anschlusseinrichtung 30 besonders einfach isoliert sein, und die Anschlusseinrichtung 30 kann von der Außenseite der Schutzhülle 6 aus, die gleichzeitig an einer Außenseite der Wandungen der Gehäuseteile 10, 20 anliegt, zugänglich sein. Die Schutzhülle 6 bildet ferner Abdichtungsfedern 60 aus, die in korrespondierende Nuten der Wandungen der Gehäuseteile 10, 20 eingreifen und dort abdichtend mit den Wandungen verpresst sind. Entsprechend bilden die Abdichtungsfedern 60 den Verbindungsabschnitt der Membran 3 aus. Die Abdichtungsfedern 60 laufen horizontal ununterbrochen umlaufend geschlossen um den Membranabschnitt der Membran 3 um. Vorliegend erzeugt die oben erläuterte Presseinrichtung eine Haltekraft, mit der die Membran zwischen den Gehäuseteilen 10, 20 gepresst gehalten ist und die dem Anteil der die abdichtende Anlage der Abdichtungsnuten gewährleistenden Presskraft entspricht, mit der die Abdichtungsfedern 60 abdichtend anliegend in Vertikalrichtung gegen die Gehäuseteile 10, 20 pressen, wobei darüber hinaus die Abdichtungsnuten 60 in den korrespondierenden Federn der Gehäuseteile 10, 20 horizontal verpresst sind, wodurch ein weiterer Anteil dieser die abdichtende Anlage gewährleistenden Presskraft gebildet ist. Der Membranabschnitt bezeichnet den Abschnitt der Membran 3, mit dem die Membran 3 den in der Horizontalen verlaufenden lichten Querschnitt der Wandung des jeweiligen Gehäuseteils 10, 20 verschließt, was erfindungsgemäß allgemein zutreffend sein kann. Der Membrankern 7 erstreckt sich vorliegend in seiner horizontalen Erstreckung über den Membranabschnitt hinaus. Der Membranabschnitt weist eine erste sich in der Horizontalen, d. h. senkrecht zur Vertikalrichtung Z, flächig erstreckende Seite auf, mit der er das Messvolumen begrenzt, und eine zweite flächige Seite, mit der er das Referenzvolumen begrenzt, wobei erste und zweite flächige Seite entlang der Vertikalrichtung Z in entgegengesetzte Richtungen weisen und unmittelbar an die jeweilige Wandung des jeweiligen Gehäuseteils angrenzen, mit denen sie gemeinsam das jeweilige Volumen begrenzen.

In Figur 2 ist eine weitere Ausführungsform eines erfindungsgemäßen Differenzdrucksensors 1 gezeigt. Nachfolgend wird lediglich auf die sich von dem Differenzdrucksensor 1 gemäß Figur 1 unterscheidenden Merkmale des Differenzdrucksensors 1 gemäß Figur 2 eingegangen, wohingegen auf die funktional im Wesentlichen identisch ausgestalteten Bestandteile, die mit denselben Bezugszeichen gekennzeichnet sind, nicht mehr eingegangen wird. Im Gegensatz zu dem Ausführungsbeispiel gemäß Figur 1 weist bei dem Ausführungsbeispiel gemäß Figur 2 die Membran 3 keine umlaufenden Abdichtungsnuten auf, sondern es ist an jeder vertikalen Seite der Membran 3, mit der sie an der Wandung des jeweiligen Bauteils 10, 20 anliegt, jeweils ein Dichtring 9 vorgesehen, der entsprechend den zu Figur 1 erläuterten Abdichtungsnuten 60 geschlossen umlaufend um den Membranabschnitt der Membran 3 verläuft, wobei der Verbindungsabschnitt der Membran 3 bzw. der weitere Verbindungsabschnitt der Membran 3 auf Höhe des Dichtrings 9 ausgebildet ist, da die Membran 3 abdichtend gegen den Dichtring 9 gepresst gehalten ist. Bei dem Ausführungsbeispiel gemäß Figur 2 ist ferner die Schutzhülle 6 der Membran 3 mit einem abgewinkelten, die darin verlaufende Leitung 8 isolierenden Steg ausgebildet, an dem die Anschlusseinrichtung 30 vorgesehen ist. Eine solche Ausgestaltung kann zur besseren Zugänglichkeit der Anschlusseinrichtung 30 in bestimmten Einsatzgebieten besonders vorteilhaft sein. Darüber hinaus weist der Dehnungsmesssensor 5 zwei Dehnungsmesssensorbauteile auf, die an gegenüberliegenden vertikalen Seiten des Membrankerns 7 angeordnet sind, was erfindungsgemäß allgemein vorteilhaft ist.

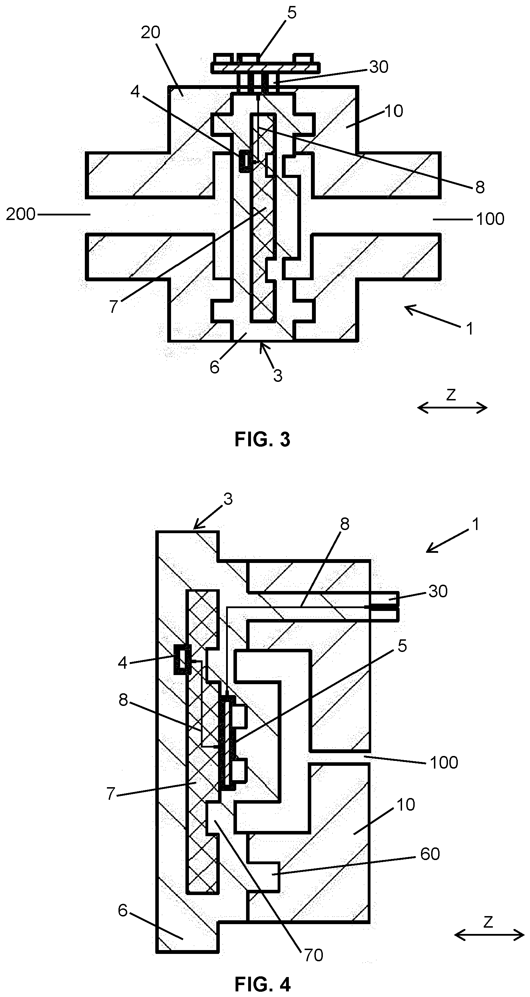

In Figur 3 ist eine weitere Ausführungsform eines erfindungsgemäßen Differenzdrucksensors 1 gezeigt. Nachfolgend wird lediglich auf die sich von dem Differenzdrucksensor 1 gemäß Figur 1 unterscheidenden Merkmale des Differenzdrucksensors gemäß Figur 3 eingegangen, wohingegen auf die funktional im Wesentlichen identischen ausgestalteten Bestandteile, die mit denselben Bezugszeichen gekennzeichnet sind, nicht mehr eingegangen wird. Im Gegensatz zu dem Ausführungsbeispiel gemäß Figur 1 weist die Membran 3 bei dem Ausführungsbeispiel gemäß Figur 3 keine elektronische Komponente auf. Stattdessen ist der Dehnungsmesssensor 4 über eine elektrische Leitung 8 direkt mit der Anschlusseinrichtung 30 verbunden, die an der Schutzhülle 6 der Membran 3 vorgesehen ist und von der Membran 3 umfasst ist. An die Anschlusseinrichtung 30 ist eine Leiterplatte 5 als externe elektronische Komponente angeschlossen.

In Figur 4 ist eine weitere Ausführungsform eines erfindungsgemäßen Differenzdrucksensors 1 gezeigt. Nachfolgend wird lediglich auf die sich von dem Differenzdrucksensor 1 gemäß Figur 1 unterscheidenden Merkmale des Differenzdrucksensors gemäß Figur 4 eingegangen, wohingegen auf die funktional im Wesentlichen identischen ausgestalteten Bestandteile, die mit denselben Bezugszeichen gekennzeichnet sind, nicht mehr eingegangen wird. Im Gegensatz zu dem Ausführungsbeispiel gemäß Figur 1 weist das Gehäuse des Differenzdrucksensors 1 gemäß Figur 4 lediglich einen Gehäuseteil und somit nur eine Wandung auf.

Darüber hinaus bildet die Wandung keinen Anschlussstutzen aus, sondern es ist lediglich eine Anschlussöffnung 100 in der Wandung vorgesehen. Bei dem Ausführungsbeispiel gemäß Figur 4 ist somit das Referenzvolumen, das an der zweiten flächigen Seite des Membranabschnitts der Membran 3 vorgesehen ist, räumlich unbegrenzt. Entsprechend kann der Differenzdrucksensor 1 zum Einsatz kommen, indem die Membran 3 mit der zweiten flächigen Seite des Membranabschnitts in die Umgebung weist und das Gehäuse direkt in eine korrespondierende Aufnahmeöffnung einer Vorrichtung eingesetzt werden kann, so dass die Anschlussöffnung 100 in ein zu überprüfendes Volumen der Vorrichtung mündet. Bei dem Differenzdrucksensor 1 gemäß Figur 4 ist ferner die Membran 3 mit ihrer Schutzhülle 6 über ihre umlaufende Abdichtungsfeder 60 mit der Wandung verschweißt, wodurch die Membran 3 positionsfest und abdichtend an der Wandung fixiert ist. Die Abdichtungsfeder 60 weist ferner in einem horizontalen Abschnitt einen Abdichtungssteg auf, der in Vertikalrichtung Z durch die Wandung hindurch verläuft und an dessen Ende die Anschlusseinrichtung 30 der Membran 3 vorgesehen ist. Die Anschlusseinrichtung 30 ist somit von einer Außenseite des Gehäuses des Differenzdrucksensors 1 zugänglich, wobei sie sich in dem vorliegenden Ausführungsbeispiel in Vertikalrichtung Z über das vertikale Ende der Wandung hinaus erstreckt. Durch den Abdichtungssteg hindurch verläuft eine elektrische Leitung 8, durch die die Anschlusseinrichtung 30 an die elektronische Komponente der Membran 3 angeschlossen ist, wobei vorliegend die elektronische Komponente nur eine Leiterplatte 5 mit darauf angeordneten elektronischen Bauteilen aufweist.

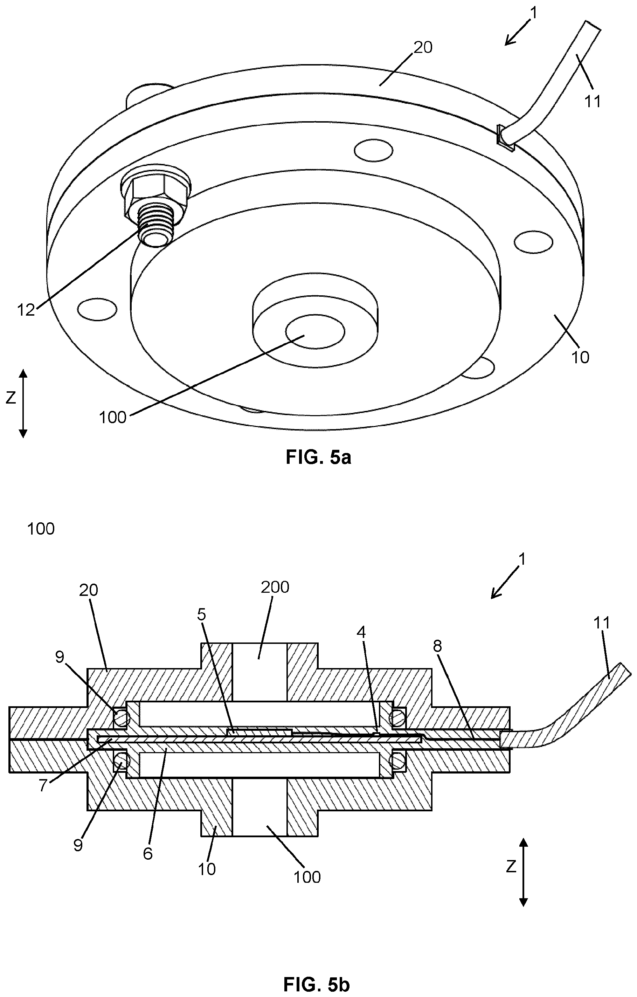

In Figur 5 umfassend Figuren 5a und 5b ist eine weitere Ausführungsform eines erfindungsgemäßen Differenzdrucksensors 1 gezeigt. Nachfolgend wird lediglich auf die sich von dem Differenzdrucksensor 1 gemäß Figur 1 unterscheidenden Merkmale des Differenzdrucksensors 1 gemäß Figur 2 eingegangen, wohingegen auf die funktional im Wesentlichen identisch ausgestalteten Bestandteile, die mit denselben Bezugszeichen gekennzeichnet sind, nicht mehr eingegangen wird. Bei dem Differenzdrucksensor 1 gemäß Figur 5 ist die Schutzhülle 6 durch eine Haltekraft zwischen den beiden Gehäuseteilen 10, 20 verpresst gehalten, wobei der Verbindungsabschnitt mit einer von der Haltekraft unabhängigen Presskraft gegen die Wandung abdichtend gepresst gehalten ist, indem die Membran durch die Haltekraft dergestalt an den Gehäuseteilen 10, 20 fixiert ist, dass der Verbindungsabschnitt in eine Zwangsführung gegenüber den Gehäuseteilen 10, 20 gebracht ist, durch die die erläuterte Presskraft gewährleistet ist, die sich durch die elastischen Eigenschaften von Verbindungsabschnitt und den vorgesehenen Dichtringen 9 ergibt. Die Haltekraft wird vorliegend durch Schrauben 11 als Presseinrichtung aufgebracht, von denen beispielhaft in Figur 5a eine dargestellt ist. Die elektrische Leitung 8 ist durch ein Kabel 12 an die Außenseite geführt. Am Ende des Kabels 11 ist eine nicht dargestellte Anschlusseinrichtung vorgesehen.

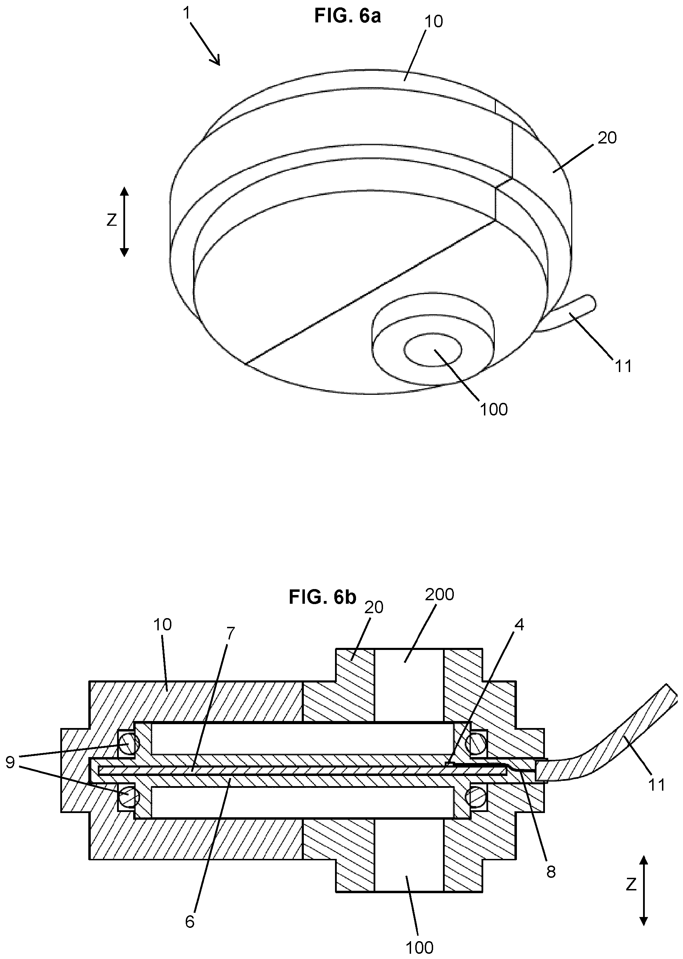

In Figur 6 umfassend Figuren 6a und 6b ist eine weitere Ausführungsform eines erfindungsgemäßen Differenzdrucksensors 1 gezeigt. Der Differenzdrucksensor 1 gemäß Figur 6 weist ein Gehäuse auf, das einen ersten Gehäuseteil 10 und einen zweiten Gehäuseteil 20 umfasst. Während bei den Ausführungsformen gemäß den Figuren 1 bis 5 die Gehäuseteile 10, 20 in Vertikalrichtung Z nebeneinander angeordnet und durch eine in Vertikalrichtung Z wirkende Haltekraft gegeneinander gepresst gehalten sind, sind die Gehäuseteile 10, 20 der Ausführungsform gemäß Figur 6 horizontal nebeneinander angeordnet und durch eine nicht dargestellte Presseinrichtung horizontal gegeneinander gepresst gehalten. Somit bilden die Gehäuseteile 10, 20 jeweils gemeinsam die erläuterte Wandung aus, die gemeinsam mit der Membran 3 das Messvolumen und das Referenzvolumen begrenzt. Entsprechend bilden die Gehäuseteile 10, 20 auch die Anschlussöffnungen 100, 200 aus, die in das Messvolumen bzw. das Referenzvolumen münden, wobei vorliegend beide Anschlussöffnungen 100, 200 durch den zweiten Gehäuseteil 20 ausgebildet sind. Die Membran 3 ist dadurch, dass sie zwischen den Gehäuseteilen 10, 20 angeordnet ist, durch die Festlegung der Position der Gehäuseteile 10, 20 zueinander in eine Zwangsführung gegenüber den Gehäuseteilen 10, 20 gebracht, wodurch, wie zu Figur 5 erläutert, die erläuterte Presskraft gewährleistet ist, mit der sie abdichtend gegen beide Gehäuseteile 10, 20 gepresst an diesen anliegt.

### Bezugszeichenliste

- 1: Differenzdrucksensor
- 3: Membran
- 4: Dehnungsmesssensor
- 5: Leiterplatte
- 6: Schutzhülle
- 7: Membrankern
- 8: elektrische Leitung
- 9: Dichtring
- 10: erster Gehäuseteil
- 11: Kabel
- 12: Schraube
- 20: zweiter Gehäuseteil
- 30: Anschlusseinrichtung
- 60: Abdichtungsfeder
- 70: Ausnehmung
- 100: Anschlussöffnung des ersten Gehäuseteils
- 200: Anschlussöffnung des zweiten Gehäuseteils
- Z: Vertikalrichtung

## Patentansprüche

1. Differenzdrucksensor (1) umfassend ein Gehäuse mit einer Wandung und eine Membran (3), die sich in einer Horizontalen über einen Membranabschnitt hinweg erstreckt, der eine erste und eine zweite sich horizontal erstreckende flächige Seite aufweist, wobei die Wandung und der Membranabschnitt mit seiner ersten flächigen Seite gemeinsam ein Messvolumen in dem Gehäuse begrenzen und wobei die zweite flächige Seite des Membranabschnitts an ein Referenzvolumen angrenzt, wobei der Differenzdrucksensor (1) einen Dehnungsmesssensor (4) aufweist, der innerhalb des Membranabschnitts an der Membran (3) angeordnet ist, wobei
der Membranabschnitt unmittelbar an die Wandung angrenzt und von einem Verbindungsabschnitt der Membran (3) umlaufend ununterbrochen umschlossen ist und durch den Verbindungsabschnitt umlaufend ununterbrochen abdichtend mit der Wandung verbunden ist und der Dehnungsmesssensor (1) gegenüber dem Messvolumen fluiddicht isoliert ist, wobei insbesondere die Wandung in einem von dem Membranabschnitt beabstandeten Wandungsabschnitt einen Anschlussstutzen mit einer in das Messvolumen mündenden Anschlussöffnung (100, 200) aufweist, wobei die Membran (3) einen sich in der Horizontalen erstreckenden Membrankern (7) aufweist, wobei der Dehnungsmesssensor (4) an dem Membrankern (7) angeordnet ist,
wobei die Membran (3) eine den Membrankern (7) einschließende Schutzhülle (6) aufweist und sich die Schutzhülle (6) über den gesamten Membranabschnitt erstreckt und der Membrankern (7) sich zumindest über einen Teil des Membranabschnitts hinweg erstreckt und der Dehnungsmesssensor (4) gemeinsam mit dem Membrankern (7) von der Schutzhülle (6) umschlossen ist, **dadurch gekennzeichnet, dass** die Schutzhülle (6) den Verbindungsabschnitt ausbildet, wobei die Schutzhülle (6) mittels Spritzgießverfahrens als Umspritzung des Membrankerns (7) hergestellt ist.

2. Differenzdrucksensor (1) nach Anspruch 1,
**dadurch gekennzeichnet, dass**
der Verbindungsabschnitt ununterbrochen abdichtend mit der Wandung verbunden ist, indem er gegen die Wandung gepresst ist, insbesondere lösbar gegen die Wandung gepresst ist, und/oder der Verbindungsabschnitt und die erste flächige Seite des Membranabschnitts aus einem selben Material hergestellt sind, wobei insbesondere der Verbindungsabschnitt einen ersten Bereich aufweist, der mit einer Haltekraft gegen die Wandung gepresst gehalten ist, sowie einen zweiten Bereich, der den Membranabschnitt der Membran (3) umlaufend ununterbrochen umschließt und um den Membranabschnitt ununterbrochen umlaufend abdichtend mit der Wandung verbunden ist.

3. Differenzdrucksensor (1) nach einem der vorangehenden Ansprüche,
**dadurch gekennzeichnet, dass**
der Membrankern (7) aus einem steiferen Material hergestellt ist als die Schutzhülle (6) und/oder dass die Schutzhülle (6) an beiden vertikalen Seiten des Membrankerns (7) eine vertikale Dicke aufweist, die geringer ist als eine vertikale Dicke des Membrankerns (7).

4. Differenzdrucksensor (1) nach einem der vorangehenden Ansprüche,
**dadurch gekennzeichnet, dass**
die Schutzhülle (6) durch eine in Vertikalrichtung (Z) wirkende Presseinrichtung lösbar und abdichtend mit der Wandung verpresst ist, wobei insbesondere der Membrankern (7) sich horizontal innerhalb eines Abschnitts der Membran (3) erstreckt, auf den die Presseinrichtung einwirkt, wobei insbesondere der Verbindungsabschnitt der Membran (3) unmittelbar gegen die der Wandung abdichtend mit der Wandung verbunden, insbesondere verpresst ist.

5. Differenzdrucksensor (1) nach einem der Ansprüche 1 bis 4,
**dadurch gekennzeichnet, dass**
die Membran (3) eine elektronische Komponente zum elektronischen Verarbeiten von aus dem Dehnungsmesssensor (4) ausgelesenen Signalen aufweist, die an dem Membranabschnitt, insbesondere dem Membrankern (7), angeordnet ist, wobei die elektronische Komponente durch eine erste elektrische Leitung (8) mit dem Dehnungsmesssensor (4) verbunden ist und durch eine zweite elektrische Leitung (8) mit einer von einer Außenseite der Wandung des Gehäuses aus zugänglichen Anschlusseinrichtung (30) verbunden ist, wobei insbesondere die Membran (3) die Anschlusseinrichtung (30) aufweist und die Anschlusseinrichtung (30) von der Außenseite des Gehäuses aus zugänglich an einer Seite der Membran (3) angeordnet ist und/oder
die elektronische Komponente gemeinsam mit dem Dehnungsmesssensor (4) und dem Membrankern (7) in der Schutzhülle (6) eingeschlossen ist.

6. Differenzdrucksensor (1) nach Anspruch 5,
**dadurch gekennzeichnet, dass**
die elektronische Komponente zumindest eine Leiterplatte (5) und mehrere auf der Leiterplatte (5) angeordnete elektronische Bauteile aufweist, wobei insbesondere die elektronische Komponente horizontal beabstandet von dem Dehnungsmesssensor (4) angeordnet ist, wobei insbesondere die elektronische Komponente eine erste und eine zweite Leiterplatte (5) aufweist, auf der jeweils mehrere elektronische Bauteile angeordnet sind, wobei die erste Leiterplatte (5) an einer ersten vertikalen Seite des Membrankerns (7) angeordnet ist und die zweite Leiterplatte (5) an einer zweiten, von der ersten vertikal weg weisenden Seite des Membrankerns (7) angeordnet ist, wobei insbesondere die erste und zweite Leiterplatte (5) durch den Membrankern (7) hindurch elektrisch miteinander verbunden sind.

7. Differenzdrucksensor (1) nach einem der vorangehenden Ansprüche,
**dadurch gekennzeichnet, dass**
der Dehnungsmesssensor (4) über eine Anlagefläche hinweg mit dem Membrankern (7) positionsfest verbunden ist, wobei der Differenzdrucksensor (1) eine Steuereinrichtung umfasst, die dazu ausgebildet ist, eine Kombination einer radialen mit einer tangentialen über die Anlagefläche in dem Dehnungsmesssensor (4) in Abhängigkeit von einer Form des Membrankerns (7) innerhalb der Anlagefläche erzeugten Spannungskomponente zu erfassen und als Messwert für eine Druckdifferenz zwischen einem ersten, in dem Messvolumen an der ersten flächigen Seite des Membranabschnitts vorliegenden Druck und einem zweiten, in dem Referenzvolumen an der zweiten flächigen Seite des Membranabschnitts vorliegenden Druck einen sich aus dieser Kombination ergebenden Funktionswert auszugeben.

8. Differenzdrucksensor (1) nach Anspruch 7,
**dadurch gekennzeichnet, dass**
der Differenzdrucksensor (1) eine Brückenschaltung mit vier Brückenschaltungskomponenten aufweist, wobei jede der Brückenschaltungskomponenten dazu ausgebildet ist, eine Kombination von einer über einen ihr jeweils zugeordneten Anlageflächenabschnitt des Dehnungsmesssensors (4) an dem Membranabschnitt erzeugten radialen und tangentialen Spannungskomponente zu erfassen und einen sich aus dieser Kombination ergebenden Funktionswert als Wert der Brückenschaltungskomponente in der Brückenschaltung auszugeben.

9. Differenzdrucksensor (1) nach einem der vorangehenden Ansprüche,
**dadurch gekennzeichnet, dass**
der Dehnungsmesssensor (4) innerhalb eines horizontalen Abschnitts des Membranabschnitts an diesem angeordnet ist, in dem der Membranabschnitt eine geringere Steifigkeit, insbesondere eine geringere vertikale Dicke, als in an diesen Abschnitt angrenzenden horizontalen Abschnitten aufweist, wobei insbesondere der Dehnungsmesssensor (4) auf horizontaler Höhe einer in dem Membranabschnitt vorgesehenen Ausnehmung (70), insbesondere an einem Rand dieser Ausnehmung (70), angeordnet ist.

10. Differenzdrucksensor (1) nach einem der vorangehenden Ansprüche,
**dadurch gekennzeichnet, dass**
die Membran (1) als separate Einheit unabhängig von dem Gehäuse hergestellt ist und als separat hergestellte Einheit mit dem Gehäuse verbunden ist, insbesondere abdichtend und lösbar verbunden ist.

11. Differenzdrucksensor (1) nach einem der vorangehenden Ansprüche,
**dadurch gekennzeichnet, dass**
das Gehäuse einen ersten und einen zweiten Gehäuseteil (10, 20) umfasst, wobei die Membran (3) zwischen den beiden Gehäuseteilen (10, 20) angeordnet ist, wobei die Gehäuseteile (10, 20) gemeinsam die Wandung ausbilden und die Membran (3) gemeinsam mit der Wandung das Messvolumen und das Referenzvolumen begrenzt und das Messvolumen und das Referenzvolumen durch die Membran (3) voneinander getrennt sind,
oder
der erste Gehäuseteil (10) die Wandung und der zweite Gehäuseteil (20) eine weitere Wandung umfasst, wobei die Membran (3) gemeinsam mit der Wandung das Messvolumen begrenzt und gemeinsam mit der weiteren Wandung das Referenzvolumen begrenzt, wobei das Messvolumen und das Referenzvolumen durch die Membran (3) voneinander getrennt sind und die Wandung und die weitere Wandung jeweils eine Anschlussöffnung (100, 200) ausbilden, die in das von der jeweiligen Wandung begrenzte Volumen mündet.

12. Differenzdrucksensor (1) nach Anspruch 11,
**dadurch gekennzeichnet, dass**
der Verbindungsabschnitt zwischen den beiden Gehäuseteilen (10, 20) angeordnet und gegen die Wandung abgedichtet ist, insbesondere mit einer Presskraft abdichtend gegen die Wandung gepresst ist, wobei insbesondere die Membran (3) einen von dem Verbindungsabschnitt beabstandeten weiteren Verbindungsabschnitt aufweist, der gegen die weitere Wandung abgedichtet ist, insbesondere durch die Presskraft abdichtend gegen die weitere Wandung gepresst ist.

13. Verwendung eines Differenzdrucksensors (1) nach einem der Ansprüche 1 bis 12 zum Messen einer Druckdifferenz zwischen zwei fluidführenden Leitungssystemen, wobei ein erstes der Leitungssysteme an das Messvolumen angeschlossen wird und ein zweites der Leitungssysteme an das Referenzvolumen angeschlossen wird, wobei innerhalb der Membran (3) aus dem Dehnungsmesssensor (4) ausgelesene Signale elektronisch verarbeitet werden und durch eine Anschlusseinrichtung (3) des Differenzdrucksensors (1) an eine externe Weiterverarbeitungseinrichtung ausgegeben werden.

## Claims

1. Differential pressure sensor (1) comprising a housing with a wall and a membrane (3) extending horizontally across a membrane section having a first and a second horizontally extending flat side, wherein the wall and the membrane section with its first flat side together delimit a measuring volume in the housing and wherein the second flat side of the membrane section adjoins a reference volume, wherein the differential pressure sensor (1) has a strain measurement sensor (4) which is arranged inside the membrane section on the membrane (3), wherein
the membrane section is directly adjacent to the wall and is surrounded continuously and uninterruptedly by a connecting section of the membrane (3) and is connected to the wall in a continuous, uninterrupted sealing manner by the connecting section, and the strain measurement sensor (1) is isolated in a fluid-tight manner from the measuring volume, wherein, in particular, the wall has a connection piece with a connection opening (100, 200) that opens into the measuring volume in a wall section spaced apart from the membrane section, wherein the membrane (3) has a membrane core (7) extending horizontally, wherein the strain measurement sensor (4) is arranged on the membrane core (7),
wherein the membrane (3) has a protective cover (6) surrounding the membrane core (7) and the protective cover (6) extends over the entire membrane section and the membrane core (7) extends at least over a part of the membrane section and the strain measurement sensor (4) together with the membrane core (7) is surrounded by the protective cover (6),
**characterized in that**
the protective cover (6) forms the connecting section, wherein the protective cover (6) is produced by injection molding as an overmold of the membrane core (7).

2. Differential pressure sensor (1) according to claim 1,
**characterized in that**
the connecting section is connected to the wall in an uninterrupted sealing manner by being pressed against the wall, in particular by being pressable against the wall in a releasable manner, and/or the connecting section and the first flat side of the membrane section are made of the same material, wherein, in particular, the connecting section has a first region which is held pressed against the wall by a holding force, and a second region which surrounds the membrane section of the membrane (3) continuously and uninterruptedly and is connected to the wall in a continuous and uninterrupted sealing manner around the membrane section.

3. Differential pressure sensor (1) according to any one of the preceding claims,
**characterized in that**
the membrane core (7) is made of a stiffer material than the protective cover (6) and/or the protective cover (6) has a vertical thickness on both vertical sides of the membrane core (7) which is less than a vertical thickness of the membrane core (7).

4. Differential pressure sensor (1) according to any one of the preceding claims,
**characterized in that**
the protective cover (6) is pressed against the wall in a releasable and sealing manner by a pressing device acting in the vertical direction (Z), wherein in particular the membrane core (7) extends horizontally within a section of the membrane (3) on which the pressing device acts, wherein, in particular, the connecting section of the membrane (3) is connected directly to and in particular pressed against the wall in a manner to seal against the wall.

5. Differential pressure sensor (1) according to any one of claims 1 to 4,
**characterized in that**
the membrane (3) has an electronic component for electronically processing signals read out from the strain measurement sensor (4) and is arranged on the membrane section, in particular the membrane core (7), wherein the electronic component is connected to the strain measurement sensor (4) by a first electrical line (8) and to a connection device (30) accessible from an outside of the wall of the housing by a second electrical line (8), wherein, in particular, the membrane (3) has the connection device (30) and the connection device (30) is arranged on one side of the membrane (3) so as to be accessible from the outside of the housing
and/or
the electronic component is enclosed in the protective cover (6) together with the strain sensor (4) and the membrane core (7).

6. Differential pressure sensor (1) according to claim 5,
**characterized in that**
the electronic component comprises at least one printed circuit board (5) and a plurality of electronic components arranged on the printed circuit board (5), wherein in particular the electronic component is arranged horizontally spaced apart from the strain measurement sensor (4), wherein in particular the electronic component comprises a first and a second printed circuit board (5) on which several electronic components are arranged, wherein the first printed circuit board (5) is arranged on a first vertical side of the membrane core (7) and the second printed circuit board (5) is arranged on a second side of the membrane core (7) pointing away from the first, wherein in particular the first and second printed circuit boards (5) are electrically connected to each other through the membrane core (7).

7. Differential pressure sensor (1) according to any one of the preceding claims,
**characterized in that**
the strain sensor (4) is connected to the membrane core (7) in a positionally fixed manner across a contact surface, wherein the differential pressure sensor (1) comprises a control device which is designed to detect a combination of a radial and tangential stress component generated across the contact surface in the strain sensor (4) as a function of a shape of the membrane core (7) within the contact surface and to output a function value resulting from this combination as a measured value for a pressure difference between a first pressure present in the measuring volume on the first flat side of the membrane section and a second pressure present in the reference volume on the second flat side of the membrane section.

8. Differential pressure sensor (1) according to claim 7,
**characterized in that**
the differential pressure sensor (1) has a bridge circuit with four bridge circuit components, wherein each of the bridge circuit components is designed to detect a combination of a radial and tangential stress component generated across a contact surface section respectively assigned to it of the strain measurement sensor (4) on the membrane section and to output a function value resulting from this combination as the value of the bridge circuit component in the bridge circuit.

9. Differential pressure sensor (1) according to any one of the preceding claims,
**characterized in that**
the strain measurement sensor (4) is arranged within a horizontal section of the membrane section on the membrane section in which the membrane section has a lower stiffness, in particular a lower vertical thickness, than in horizontal sections adjacent to this section, wherein in particular the strain measurement sensor (4) is arranged at a horizontal height of a recess (70) provided in the membrane section, in particular at an edge of this recess (70).

10. Differential pressure sensor (1) according to any one of the preceding claims,
**characterized in that**
the membrane (1) is manufactured as a separate unit independent of the housing and is connected to the housing as a separately manufactured unit, in particular in a sealing and detachable manner.

11. Differential pressure sensor (1) according to any one of the preceding claims,
**characterized in that**
the housing comprises a first and a second housing part (10, 20), the membrane (3) being arranged between the two housing parts (10, 20), wherein
the housing parts (10, 20) together form the wall and the membrane (3) together with the wall delimits the measuring volume and the reference volume, and the measuring volume and the reference volume are separated from each other by the membrane (3),
or
the first housing part (10) comprises the wall and the second housing part (20) comprises a further wall, wherein the membrane (3) together with the wall delimits the measuring volume and together with the further wall delimits the reference volume, wherein the measuring volume and the reference volume are separated from one another by the membrane (3) and the wall and the further wall each form a connection opening (100, 200) which opens into the volume delimited by the respective wall.

12. Differential pressure sensor (1) according to claim 11,
**characterized in that**
the connecting section between the two housing parts (10, 20) is arranged and sealed against the wall, in particular pressed sealingly against the wall with a pressing force, wherein in particular the membrane (3) has a further connecting section spaced apart from the connecting section, which is sealed against the further wall, in particular by being pressed sealingly against the further wall by the pressing force.

13. Use of a differential pressure sensor (1) according to any one of claims 1 to 12 for measuring a pressure difference between two fluid-carrying pipe systems, wherein a first of the pipe systems is connected to the measuring volume and a second of the pipe systems is connected to the reference volume, wherein signals read out from the strain measurement sensor (4) are processed electronically within the membrane (3) and are output by a connection device (3) of the differential pressure sensor (1) to an external further processing device.

## Revendications

1. Capteur de pression différentielle (1) comprenant un boîtier avec une paroi et une membrane (3) s'étendant horizontalement à travers une section de membrane ayant un premier et un deuxième côté étendu s'étendant horizontalement, dans lequel la paroi et la section de membrane avec son premier côté étendu délimitent ensemble un volume de mesure dans le boîtier et dans lequel le deuxième côté étendu de la section de membrane est adjacent à un volume de référence, dans lequel le capteur de pression différentielle (1) comporte un capteur d'extensométrie (4) qui est disposé à l'intérieur de la section de membrane sur la membrane (3), dans lequel
la section de membrane est directement adjacente à la paroi et est entourée de manière continue et ininterrompue par une section de raccordement de la membrane (3) et est reliée à la paroi de manière continue, ininterrompue et étanche par la section de raccordement, et le capteur d'extensométrie (1) est isolé de manière étanche aux fluides du volume de mesure, dans lequel, en particulier, la paroi comporte une pièce de raccordement avec une ouverture de raccordement (100, 200) qui débouche dans le volume de mesure dans une section de paroi espacée de la section de membrane, dans lequel la membrane (3) comporte un noyau de membrane (7) s'étendant horizontalement, dans lequel le capteur de mesure de déformation (4) est disposé sur le noyau de membrane (7), dans lequel
la membrane (3) comporte un capot de protection (6) qui entoure le noyau de membrane (7) et le capot de protection (6) s'étend sur toute la section de membrane et le noyau de membrane (7) s'étend au moins sur une partie de la section de membrane et le capteur d'extensométrie (4) est entouré avec le noyau de membrane (7) par le capot de protection (6),
**caractérisé en ce que**
le capot de protection (6) forme la section de raccordement, le capot de protection (6) étant fabriqué par moulage par injection en tant que surmoulage du noyau de membrane (7).

2. Capteur de pression différentielle (1) selon la revendication 1, **caractérisé en ce que**
la section de raccordement est reliée à la paroi de manière étanche et ininterrompue par pression contre la paroi, en particulier par pression contre la paroi de manière détachable, et/ou la section de raccordement et le premier côté étendu de la section de membrane sont réalisés dans le même matériau, dans lequel, en particulier, la section de raccordement présente une première zone qui est maintenue pressée contre la paroi par une force de maintien, et une deuxième zone qui entoure la section de membrane de la membrane (3) de manière continue et ininterrompue et qui est reliée à la paroi de manière étanche, de manière continue et ininterrompue, autour de la section de membrane.

3. Capteur de pression différentielle (1) selon l'une quelconque des revendications précédentes,
**caractérisé en ce que**
le noyau de membrane (7) est constitué d'un matériau plus rigide que le capot de protection (6) et/ou le capot de protection (6) présente, sur les deux côtés verticaux du noyau de membrane (7), une épaisseur verticale inférieure à l'épaisseur verticale du noyau de membrane (7).

4. Capteur de pression différentielle (1) selon l'une quelconque des revendications précédentes,
**caractérisé en ce que**
le capot de protection (6) est pressé contre la paroi de manière amovible et étanche par un dispositif de pression agissant dans la direction verticale (Z), dans lequel, en particulier, le noyau de membrane (7) s'étend horizontalement dans une section de la membrane (3) sur laquelle agit le dispositif de pression, dans lequel, en particulier, la section de raccordement de la membrane (3) est raccordée directement à la paroi et, en particulier, pressée contre la paroi de manière étanche.

5. Capteur de pression différentielle (1) selon l'une quelconque des revendications 1 à 4,
**caractérisé en ce que**
la membrane (3) comporte un composant électronique pour traiter électroniquement les signaux lus par le capteur d'extensométrie (4) et est disposé sur la section de membrane, en particulier le noyau de membrane (7), le composant électronique étant relié au capteur d'extensométrie (4) par une première ligne électrique (8) et à un dispositif de raccordement (30) accessible depuis l'extérieur de la paroi du boîtier par une deuxième ligne électrique (8), dans lequel, en particulier, la membrane (3) comporte le dispositif de connexion (30) et le dispositif de connexion (30) est disposé sur un côté de la membrane (3) de manière à être accessible depuis l'extérieur du boîtier
et/ou
le composant électronique est enfermé dans le couvercle de protection (6) avec le capteur d'extensométrie (4) et le noyau de membrane (7).

6. Capteur de pression différentielle (1) selon la revendication 5,
**caractérisé en ce que**
le composant électronique comprend au moins une carte de circuit imprimé (5) et une pluralité de composants électroniques disposés sur la carte de circuit imprimé (5), dans lequel en particulier le composant électronique est disposé horizontalement à distance du capteur d'extensométrie (4), dans lequel en particulier le composant électronique comprend une première et une deuxième carte de circuit imprimé (5) sur lesquelles sont disposés plusieurs composants électroniques, la première carte de circuit imprimé (5) étant disposée sur un premier côté vertical du noyau à membrane (7) et la deuxième carte de circuit imprimé (5) étant disposée sur un deuxième côté du noyau à membrane (7) opposé au premier, la première et la deuxième cartes de circuit imprimé (5) étant notamment reliées électriquement l'une à l'autre à travers le noyau à membrane (7).

7. Capteur de pression différentielle (1) selon l'une quelconque des revendications précédentes,
**caractérisé en ce que**
le capteur d'extensométrie (4) est relié au noyau de membrane (7) de manière fixe en travers d'une surface de contact, le capteur de pression différentielle (1) comprenant un dispositif de commande qui est conçu pour détecter une combinaison d'une composante de contrainte radiale et tangentielle générée à travers la surface de contact dans le capteur d'extensométrie (4) en fonction d'une forme du noyau de membrane (7) à l'intérieur de la surface de contact et pour délivrer une valeur fonctionnelle résultant de cette combinaison comme valeur mesurée pour une différence de pression entre une première pression présente dans le volume de mesure sur le premier côté étendu de la section de membrane et une deuxième pression présente dans le volume de référence sur le deuxième côté étendu de la section de membrane.

8. Capteur de pression différentielle (1) selon la revendication 7,
**caractérisé en ce que**
le capteur de pression différentielle (1) comporte un circuit en pont avec quatre composants de circuit en pont, chacun des composants de circuit en pont étant conçu pour détecter une combinaison d'une composante de contrainte radiale et tangentielle générée à travers une section de surface de contact qui lui est respectivement attribuée du capteur d'extensométrie (4) sur la section de membrane et pour délivrer une valeur fonctionnelle résultant de cette combinaison en tant que valeur du composant de circuit en pont dans le circuit en pont.

9. Capteur de pression différentielle (1) selon l'une quelconque des revendications précédentes,
**caractérisé en ce que**
le capteur d'extensométrie (4) est disposé dans une section horizontale de la section de membrane sur la section de membrane dans laquelle la section de membrane présente une rigidité inférieure, en particulier une épaisseur verticale inférieure, à celle des sections horizontales adjacentes à cette section, le capteur de mesure de déformation (4) étant en particulier disposé à une hauteur horizontale d'un évidement (70) prévu dans la section de membrane, en particulier au niveau d'un bord de cet évidement (70).

10. Capteur de pression différentielle (1) selon l'une quelconque des revendications précédentes,
**caractérisé en ce que**
la membrane (1) est fabriquée comme une unité séparée indépendante du boîtier et est reliée au boîtier comme une unité fabriquée séparément, en particulier de manière étanche et amovible.

11. Capteur de pression différentielle (1) selon l'une quelconque des revendications précédentes,
**caractérisé en ce que**
le boîtier comprend une première et une deuxième partie de boîtier (10, 20), la membrane (3) étant disposée entre les deux parties de boîtier (10, 20), dans lequel
les parties de boîtier (10, 20) forment ensemble la paroi et la membrane (3) délimite avec la paroi le volume de mesure et le volume de référence, et le volume de mesure et le volume de référence sont séparés l'un de l'autre par la membrane (3),
ou
la première partie de boîtier (10) comprend la paroi et la deuxième partie de boîtier (20) comprend une autre paroi, la membrane (3) délimitant avec la paroi le volume de mesure et avec l'autre paroi le volume de référence, le volume de mesure et le volume de référence étant séparés l'un de l'autre par la membrane (3) et la paroi et l'autre paroi formant chacune une ouverture de raccordement (100, 200) qui débouche dans le volume délimité par la paroi respective.

12. Capteur de pression différentielle (1) selon la revendication 11,
**caractérisé en ce que**
la section de raccordement entre les deux parties de boîtier (10, 20) est disposée et rendue étanche contre la paroi, en particulier pressée de manière étanche contre la paroi avec une force de pression, la membrane (3) présentant en particulier une autre section de raccordement espacée de la section de raccordement, qui est rendue étanche contre l'autre paroi, en particulier en étant pressée de manière étanche contre l'autre paroi par la force de pression.

13. Utilisation d'un capteur de pression différentielle (1) selon l'une quelconque des revendications 1 à 12 pour mesurer une différence de pression entre deux systèmes de tuyaux transportant des fluides, dans lequel un premier des systèmes de tuyaux est relié au volume de mesure et un deuxième des systèmes de tuyaux est relié au volume de référence, dans lequel les signaux lus par le capteur d'extensométrie (4) sont traités électroniquement à l'intérieur de la membrane (3) et sont transmis par un dispositif de raccordement (3) du capteur de pression différentielle (1) à un dispositif de traitement ultérieur externe.
